# FASCICULE DE BREVET EUROPEEN

(11) **EP 3 774 401 B1**
(45) Date de publication et mention de la délivrance du brevet: **05.10.2022**
(21) Numéro de dépôt: 19719555.5
(22) Date de dépôt: 27.03.2019
(51) Int. Cl.: B60C 19/00, B60C 23/04

(54) **TRANSPONDEUR RADIOFREQUENCE POUR PNEUMATIQUE**
FUNKTRANSPONDER FÜR REIFEN
RADIO FREQUENCY TRANSPONDER FOR A TIRE

(30) Priorité: 30.03.2018 FR 1852837
(43) Date de publication de la demande: 17.02.2021
(73) Titulaire: COMPAGNIE GENERALE DES ETABLISSEMENTS MICHELIN, 63000 Clermont-Ferrand (FR)
(72) Inventeur: DESTRAVES, Julien, 63040 CLERMONT-FERRAND Cedex 9 (FR); CARO, Thomas, 63040 CLERMONT-FERRAND Cedex 9 (FR); CLERGEAT, Jean-Mathieu, 63040 CLERMONT-FERRAND Cedex 9 (FR); COUTURIER, Laurent, 63040 CLERMONT-FERRAND Cedex 9 (FR); PORTIER, Guillaume, 63040 CLERMONT-FERRAND Cedex 9 (FR)
(74) Mandataire: Roussy, Delphine
(86) Numéro de dépôt international: PCT/FR2019/050706
(87) Numéro de publication internationale: WO 2019/186066

(56) Documents cités:
- EP-A1- 0 505 905
- WO-A1-2009/134243
- WO-A1-2016/193457
- WO-A1-2017/046245
- DE-A1- 10 300 160

## Description

### Domaine de l'invention

La présente invention concerne un dispositif électronique de radio identification ou transpondeur radio fréquence apte à être fixé sur un objet à identifier subissant, en particulier en service, de fortes sollicitations thermo mécaniques comme un pneumatique.

### Arrière-plan technologique

Pour le domaine des dispositifs d'identification RFID (acronyme de Radio Frequency IDentification), des transpondeurs radiofréquences passifs sont classiquement utilisées pour l'identification, le suivi et la gestion d'objets. Ces dispositifs permettent une gestion automatisée plus fiable et plus rapide.

Ces transpondeurs à identification radiofréquences sont constitués généralement d'au moins une puce électronique et une antenne formée par une boucle magnétique ou une antenne rayonnante que l'on fixe à l'objet à identifier.

La performance de communication du transpondeur radiofréquence s'exprime par la distance maximale de communication du transpondeur radio fréquence avec un lecteur radio fréquence pour un même signal communiqué au ou par le lecteur radiofréquence.

Dans le cas des produits fortement extensibles comme par exemple les pneumatiques, un besoin existe d'identifier le produit tout au long de son existence depuis sa fabrication jusqu'à son retrait du marché et, en particulier, lors de son usage. Ensuite, afin de faciliter cette tâche, notamment en condition d'usage, une performance de communication élevée est requise qui s'exprime par la possibilité d'interroger le transpondeur radiofréquence à longue distance du produit, plusieurs mètres, par l'intermédiaire d'un lecteur radiofréquence. Enfin, on souhaite que le coût de fabrication d'un tel dispositif soit le plus compétitif possible.

On connait dans l'état de la technique, notamment d'après le document WO 2016/193457A1, un transpondeur radiofréquence apte à répondre aux besoins des pneumatiques. Ce transpondeur est constitué d'une puce électronique, connectée à un circuit imprimé sur lequel est électriquement connectée une première antenne primaire. Cette antenne primaire est couplée électromagnétiquement à un ressort hélicoïdal mono brin constituant une antenne rayonnante dipôle. La communication avec un lecteur externe à émission radiofréquence utilise les ondes radioélectriques et en particulier la bande UHF (acronyme d'Ultra Hautes Fréquences). En conséquence, les caractéristiques du ressort hélicoïdal sont ajustées à la fréquence de communication choisie. Ainsi la disparition de jonction mécanique entre le circuit imprimé et l'antenne rayonnante améliore la tenue mécanique du transpondeur radiofréquence.

Cependant, un tel transpondeur radiofréquence présente des faiblesses. Bien que ce transpondeur radiofréquence est adaptée pour fonctionner à la fréquence de communication du lecteur externe radiofréquence, la communication radiofréquence et en particulier le couplage électromagnétique entre l'antenne rayonnante et l'antenne primaire n'est pas optimale aussi bien en réception qu'en émission radiofréquence Bien entendu, il faut aussi tenir compte des autres contraintes techniques auxquelles doit faire face les divers éléments du transpondeur radiofréquence. D'une part la tenue mécanique de l'antenne rayonnante dans un environnement fortement sollicitant thermomécaniquement comme une enveloppe pneumatique. D'autre part les caractéristiques de radioélectricité auxquelles l'antenne rayonnante doit satisfaire pour remplir cette fonction de communication Ainsi, il faut optimiser le compromis de performances entre la tenue mécanique de l'antenne, ses qualités électromagnétiques et son efficacité de radiocommunication afin d'optimiser les performances potentielles d'un tel transpondeur radiofréquence.

La présente invention porte sur un transpondeur radiofréquence visant à améliorer le compromis de performances des transpondeurs radiofréquences employés entre autres dans l'industrie du pneumatique.

### Description de l'invention

L'invention porte sur un transpondeur radiofréquence passif destiné à être intégré à un objet à identifier constitué d'un matériau fortement extensible tel un mélange ou composition élastomère. Ce transpondeur radiofréquence comprend tout d'abord une antenne rayonnante dipôle. Celle-ci est constituée d'un ressort hélicoïdal mono brin et présente un axe de révolution, un diamètre d'enroulement, un pas d'hélice, un plan médian et un diamètre de fil définissant des diamètres intérieur et extérieur de l'antenne rayonnante. Cette antenne rayonnante a une longueur L0 adaptée pour communiquer sur une bande de fréquence avec un lecteur à émission radio fréquence. Ce transpondeur radio fréquence comprend aussi une partie électronique située à l'intérieur de l'antenne rayonnante. Cette partie électronique comprend une puce électronique, une antenne primaire connectée électriquement à la puce électronique et couplée électromagnétiquement à l'antenne rayonnante. L'antenne primaire présente tout d'abord un axe sensiblement parallèle à l'axe de révolution de l'antenne rayonnante et un plan médian qui est sensiblement superposée au plan médian de l'antenne rayonnante. Enfin l'antenne primaire est circonscrite dans un cylindre dont l'axe de révolution est parallèle à l'axe de l'antenne primaire et dont le diamètre est supérieur ou égal au tiers du diamètre intérieur de l'antenne rayonnante. Ce transpondeur radiofréquence est caractérisé en ce que, pour une première zone de l'antenne rayonnante où l'antenne rayonnante n'est pas située au droit de la partie électronique, un premier pas de l'antenne rayonnante correspondant au pas d'hélice de l'antenne rayonnante dans cette première zone est supérieur à un second pas de l'antenne rayonnante correspondant au pas d'hélice de l'antenne rayonnante dans une deuxième zone où l'antenne rayonnante est située au droit de la partie électronique.

On entend ici par le terme « élastomère », l'ensemble des élastomères y compris les TPE (acronyme de Thermo Plastiques Elastomères), tels que par exemple les polymères diéniques, c'est-à-dire comprenant des unités diéniques, les silicones, les polyuréthanes et les polyoléfines.

On entend ici par le terme « couplage électromagnétique, », le couplage par rayonnement électromagnétique, c'est-à-dire le transfert sans contact physique d'énergie entre deux systèmes incluant d'une part le couplage inductif et d'autre part le couplage capacitif. L'antenne primaire est alors préférentiellement comprise dans le groupe comprenant : une bobine, une boucle ou un segment de fil ou une combinaison de ces éléments conducteurs.

Ainsi, l'absence de toute connexion mécanique entre l'antenne rayonnante et la puce électronique améliore sensiblement les performances d'endurance du transpondeur radiofréquence selon un objet de l'invention relativement au transpondeur radiofréquence du document cité.

De plus, l'antenne rayonnante, étant déconnectée de tout circuit imprimé, peut être noyée et rendue solidaire dans une masse constituée de mélanges élastomères à l'aide de solutions collants élastomère/métal bien connues de l'homme du métier avec ou sans l'utilisation de promoteur d'adhésion spécifique. Cela réduit, par la même occasion, le coût de mise en œuvre d'un tel transpondeur radiofréquence dans une masse de gomme tel qu'un pneumatique.

Enfin en ayant séparé la partie électronique du transpondeur radiofréquence (constitué de la carte électronique et de l'antenne primaire) et l'antenne rayonnante, il est possible de réaliser indépendamment chaque composant puis de les assembler ensemble lors d'une étape postérieure. Ainsi, on peut utiliser des procédés standards de chaque industrie, électronique et télécommunications ce qui réduit les coûts de fabrication d'un tel transpondeur radiofréquence. On entend ici par le terme « élastomère », l'ensemble des élastomères y compris les TPE (acronyme de Thermo Plastiques Elastomères), tels que par exemple les polymères diéniques, c'est-à-dire comprenant des unités diéniques, les silicones, les polyuréthanes et les polyoléfines.

Ici, on entend par le terme sensiblement parallèle que l'angle généré par les directions axiales de chaque antenne est inférieur ou égal à 30 degrés. Dans ce cas, le couplage électromagnétique entre les deux antennes est optimal améliorant notablement les performances de communication du transpondeur radiofréquence.

Ici, il convient d'abord de définir le plan médian des antennes primaire et rayonnante. Par définition, c'est un plan fictif séparant l'objet en deux parties égales. Dans notre cas, ce plan médian est perpendiculaire à l'axe de chaque antenne. Enfin, on entend ici par "sensiblement superposé" que la distance relative entre les plans médians est inférieure au dixième de la longueur de l'antenne rayonnante.

Ainsi l'intensité du courant électrique étant maximal au centre de l'antenne rayonnante, le champ magnétique induit par ce courant est aussi maximal au centre de l'antenne rayonnante, on assure ainsi que le couplage inductif entre les deux antennes est optimal améliorant de ce fait la performance de communication du transpondeur radiofréquence.

En imposant les dimensions relatives de l'antenne primaire par rapport aux caractéristiques du ressort hélicoïdal de l'antenne rayonnante, on assure que la distance entre les deux antennes sera inférieure au diamètre de l'antenne primaire dans le cas où l'antenne primaire se situe à l'intérieur de l'antenne rayonnante. Ainsi on optimise le couplage inductif entre les deux antennes et de ce fait la performance de communication du transpondeur radiofréquence en émission et réception.

De même, en imposant que le pas d'hélice de l'antenne rayonnante dans une deuxième zone où l'antenne rayonnante est située au droit de la partie électronique est inférieur au pas de l'antenne rayonnante en dehors de cette zone, on privilégie les aptitudes électromagnétiques de l'antenne rayonnante dans cette zone au détriment de son efficacité rayonnante qui sont mises en valeur dans la première zone de l'antenne rayonnante. Ainsi, le resserrement du pas d'hélice de l'antenne rayonnante améliore l'inductance de l'antenne rayonnante dans cette zone. Ceci est un bras de levier essentiel pour augmenter le champ magnétique généré par l'antenne rayonnante à iso courant électrique circulant dans l'antenne rayonnante. Et cette amélioration de l'inductance de l'antenne rayonnante est obtenue sans modifier nécessairement le diamètre d'enroulement de l'antenne rayonnante. De plus, le resserrement du pas de l'antenne rayonnante au droit de l'antenne primaire de la partie électronique assure une plus grande surface d'échange entre les deux antennes à iso longueur de l'antenne primaire améliorant aussi le couplage électromagnétique entre les deux antennes et de ce fait la performance de communication du transpondeur radiofréquence. Enfin, le resserrement du pas de l'antenne rayonnante permet de minimiser et de mieux maitriser les tolérances de fabrication de l'antenne rayonnante dans cette deuxième zone notamment au niveau de la détermination du diamètre intérieur de l'antenne rayonnante. Ainsi, le taux de rebut des antennes rayonnantes s'en trouve amélioré puisque la maitrise de ce diamètre conditionne le positionnement de la partie électronique au sein de l'antenne rayonnante.

De préférence, le deuxième pas d'hélice de l'antenne rayonnante est constant ou continûment variable bien que des solutions de type variable par morceaux ou simplement variable peuvent aussi être envisagées. Dans ces secondes solutions, il est préférable mais non indispensable que les variations soient de faible amplitude d'un premier morceau au morceau contigu.

Cela permet de s'assurer de l'absence de point singulier d'un point de vue mécanique au niveau de la deuxième zone de l'antenne rayonnante qui impacteraient l'intégrité physique de l'antenne rayonnante.

Selon un autre mode de réalisation avantageux, la distance minimale entre le cylindre circonscrit à l'antenne primaire et l'antenne rayonnante est inférieure à 15% de la moitié du diamètre intérieur de l'antenne rayonnante.

De ce fait, on assure une certaine proximité au moins ponctuelle entre l'antenne rayonnante et l'antenne primaire permettant d'améliorer sensiblement l'échange d'énergie entre les deux antennes lors du couplage électromagnétique. La meilleure maîtrise de fabrication du ressort hélicoïdal autorise le rapprochement des antennes sans modifier le taux de rebut des transpondeurs radiofréquence.

Selon un mode de réalisation spécifique, l'axe du cylindre circonscrit à l'antenne primaire est parallèle à l'axe de révolution de l'antenne rayonnante.

Selon un mode de réalisation très spécifique, le diamètre du cylindre circonscrit à l'antenne primaire est supérieur ou égal à 75% du diamètre intérieur de l'antenne rayonnante au droit de la partie électronique, préférentiellement supérieur ou égal à 80%.

Par ce type de conception, on assure que plusieurs points de l'antenne primaire, sont à égale distance de l'antenne rayonnante. De ce fait, on améliore encore l'efficacité du couplage électromagnétique entre les deux antennes en offrant une plus grande surface d'échange entre les deux antennes à iso courant électrique circulant dans l'une ou l'autre des antennes. Bien entendu, on multipliera d'autant les points d'échange entre les deux antennes si celles-ci présentent la même géométrie de boucle en particulier un cercle. En raison de la maitrise des jeux de réalisation de l'antenne rayonnante au droit de la partie électronique à pas resserré, il est possible d'atteindre de manière reproductible et fiable des taux de rebut bas des transpondeurs radio fréquences tout en assurant une proximité entre les deux antennes tout autour de l'axe de révolution de l'antenne rayonnante. Cette proximité est un facteur clé de la performance de communication du transpondeur radiofréquence. Bien entendu, si les deux antennes sont coaxiales, la performance est encore améliorée.

De préférence, l'antenne primaire étant connectée aux bornes d'une carte électronique comprenant la puce électronique, l'impédance électrique de l'antenne primaire est adaptée à l'impédance électrique de la carte électronique du transpondeur radiofréquence.

On entend par le terme impédance électrique de la carte électronique, l'impédance électrique prise aux bornes de la carte éléectronique liés à l'antenne primaire ce qui représente, l'impédance électrique de la carte électronique comprenant au moins une puce électronique et un circuit imprimé sur lequel la puce électronique est connectée.

En réalisant l'adaptation d'impédance de l'antenne primaire à celle de la carte électronique, on optimise le transpondeur radiofréquence à la fréquence de communication en améliorant le gain et en ayant un facteur de forme plus sélectif, une bande passante plus étroite, de la carte électronique. Ainsi les performances de communication du transpondeur radiofréquence sont améliorées pour une même quantité d'énergie transmise au transpondeur radiofréquence. Cela se traduit en particulier par une augmentation de la distance de lecture du transpondeur radiofréquence. L'adaptation d'impédance de l'antenne primaire est obtenue par l'ajustement d'au moins l'une des caractéristiques géométriques de l'antenne primaire comme par exemple, le diamètre du fil, le matériau de ce fil et la longueur du fil.

L'adaptation d'impédance de l'antenne primaire peut être aussi obtenue par l'ajout d'un circuit de transformation d'impédance constitué de composants électroniques additionnels entre l'antenne primaire et le circuit électronique comme par exemple, des filtres à base d'inductance et de capacités et des lignes de transmission.

L'adaptation d'impédance de l'antenne primaire peut aussi être obtenue par la combinaison des caractéristiques de l'antenne primaire et des caractéristiques d'un circuit de transformation d'impédance.

Selon un mode de réalisation privilégié, l'antenne primaire étant une bobine à spires, le nombre de spires est un nombre réel compris entre 5 et 30, préférentiellement compris entre 5 et 25.

Selon un autre mode de réalisation privilégié, l'adaptation d'impédance de la carte électronique est réalisée par au moins un circuit électronique additionnel positionnée sur la carte électronique, préférentiellement le circuit électronique additionnel est un circuit galvanique en forme de méandre.

En raison de la nature de la carte électronique et en particulier de la puce électronique, le nombre de spire selon le diamètre de spire, le pas, le diamètre du fil et la forme géométrique de la spire est choisi pour rapprocher l'impédance électrique de l'antenne de primaire de celle de la carte électronique. Dans certains cas où la bobine est obtenue par l'enroulement continu d'un fil conducteur, il est possible de définir un nombre non entier de tours pour adapter parfaitement l'impédance de l'antenne primaire. Si, le nombre de spires de la bobine est, par conception de l'antenne, un nombre entier ou que l'on souhaite adapter l'antenne à plusieurs types de puces électroniques, il est utile de disposer d'un circuit électronique additionnel pour parfaitement adapter l'impédance de l'antenne à celle de la carte électronique. Dans ce cas, un simple circuit galvanique est parfois suffisant pour rattraper le delta d'impédance obtenu par le nombre entier de spires de la bobine. Afin de minimiser le volume occupé par ce circuit additionnel, une structure en forme de méandre sur le circuit imprimé de la carte électronique est le meilleur compromis pour minimiser l'espace et effectuer une adaptation fine en jouant sur la longueur curviligne du circuit galvanique.

Selon un mode de réalisation particulier, la puce électronique et au moins une partie de l'antenne primaire sont noyées dans un matériau rigide et isolant électriquement tel que, par exemple, de la résine de type époxy haute température. L'ensemble constitue la partie électronique du transpondeur radiofréquence.

Ainsi, on rigidifie la partie électronique comprenant au moins une partie de l'antenne primaire et la puce électronique connectée au circuit imprimé rendant plus fiable les connexions mécaniques entre ses composants vis-à-vis des sollicitations thermo mécaniques de l'objet à identifier.

Cela permet aussi l'industrialisation de la partie électronique du transpondeur radiofréquence indépendamment de l'antenne rayonnante ou de l'objet à identifier. Notamment une miniaturisation du composant électronique comprenant l'antenne primaire et la puce électronique peut être envisagée en utilisant par exemple une micro bobine à spires comme antenne primaire.

Selon un autre mode de réalisation, la partie de l'antenne primaire non noyée dans la masse rigide est revêtue d'un matériau isolant électriquement.

Ainsi, si l'antenne primaire n'est pas entièrement contenue dans la masse rigide et isolante électriquement de la partie électronique, il est utile de l'isoler par l'intermédiaire d'un revêtement dans un matériau isolant électriquement comme ceux employés pour une gaine d'isolation de câble électrique.

Avantageusement, le rapport entre le pas d'hélice et le diamètre d'enroulement pour au moins une boucle de l'antenne rayonnante située dans la première zone de l'antenne rayonnante est supérieur à 0,8.

En effet, en dehors de la zone de l'antenne rayonnante qui est située au droit de la partie électronique et donc de l'antenne primaire un rapport du pas d'hélice sur le diamètre d'enroulement supérieur à 0,8 pour une boucle de l'antenne rayonnante a pour effet d'étirer le ressort hélicoïdal. Ainsi on diminue la longueur utile de fil pour parcourir une distance nominale de l'antenne rayonnante. De ce fait on diminue la résistance de l'antenne rayonnante. Par conséquence, à iso champ électrique, l'intensité du courant électrique circulant dans l'antenne rayonnante est plus importante à la fréquence propre de l'antenne rayonnante ce qui permet d'améliorer la performance de communication du transpondeur radiofréquence. De plus, l'étirement du ressort hélicoïdal permet d'améliorer le rendement de l'antenne rayonnante en améliorant le rapport entre la résistance de rayonnement sur la résistance de pertes. Cet étirement permettra aussi de maximiser le champ électrique rayonné par l'antenne rayonnante à iso courant électrique circulant dans l'antenne rayonnante. Enfin, l'étirement de l'antenne rayonnante permet de diminuer le volume occupé par le ressort hélicoïdal à iso pas de l'antenne rayonnante. Ainsi, dans un environnement dimensionnel contraint comme l'épaisseur d'une enveloppe pneumatique, il est possible d'augmenter l'épaisseur de gomme isolante entourant l'antenne rayonnante dans sa première zone. Cette isolation électrique minimise les pertes et améliore donc la performance de communication du transpondeur radio fréquence aussi bien en émission qu'en réception. Bien entendu, il est idéal que chacune des boucles du ressort hélicoïdal de la première zone de l'antenne rayonnante soit allongée ce qui améliore d'autant la performance de communication du transpondeur radio fréquence

De préférence, le rapport entre le pas d'hélice et le diamètre d'enroulement de chacune des boucles du ressort dans la première zone de l'antenne rayonnante est inférieure à 3, préférentiellement inférieure à 2

Bien qu'il soit intéressant d'améliorer la performance radioélectrique de l'antenne rayonnante, il ne faut pas non plus négliger les autres fonctions qu'elle doit remplir. En particulier, le ressort hélicoïdal est une structure souple adaptée pour supporter des sollicitations tridimensionnelles auxquelles le transpondeur radiofréquence devra faire face dans son application d'identification d'un objet. De ce fait, il convient de limiter l'étirement de l'antenne rayonnante dans cette première zone afin de conserver une souplesse suffisante à l'antenne rayonnante dans son ensemble et de ce fait de s'assurer de l'intégrité physique du transpondeur radiofréquence.

Selon un mode de réalisation particulier, les deux dernières boucles du ressort hélicoïdal dans la première zone de l'antenne rayonnante situées axialement, le plus extérieurement par rapport à la partie électronique sont jointives sur au moins un tour.

Ceci évite alors un entrelacement des antennes rayonnantes des transpondeurs radiofréquences lors du procédé de fabrication de ces derniers. Ainsi, la manutention des transpondeurs radiofréquences est facilitée permettant d'optimiser le coût de revient des transpondeurs radiofréquences. Le fait de limiter cet effet aux boucles situées la plus axialement extérieurement par rapport à la partie électronique n'affecte que faiblement la performance radioélectrique de l'antenne rayonnante.

Selon un mode de réalisation privilégié, pour la deuxième zone de l'antenne rayonnante où l'antenne rayonnante est située au droit de la partie électronique, le rapport entre le pas d'hélice et le diamètre d'enroulement pour chaque boucle de l'antenne rayonnante est inférieur ou égal à 0,8.

En effet, dans cette deuxième zone de l'antenne rayonnante et tout particulièrement dans la zone se situant au droit de l'antenne primaire, la performance attendue de l'antenne rayonnante est le couplage électromagnétique et en particulier inductif avec l'antenne primaire de la partie électronique. De ce fait, un premier levier pour améliorer ce couplage est d'augmenter l'inductance de l'antenne rayonnante dans cette deuxième zone ce qui revient à contracter le ressort hélicoïdal. De plus, le fait de contracter l'antenne rayonnante dans cette deuxième zone favorise aussi le transfert d'énergie entre l'antenne primaire et l'antenne rayonnante par l'augmentation de la surface d'échange proposée par l'antenne rayonnante à iso longueur de l'antenne primaire située en vis-à-vis de l'antenne rayonnante. Cette amélioration du transfert d'énergie entraine une meilleure performance de communication du transpondeur radiofréquence.

Préférentiellement, un premier diamètre intérieur de l'antenne rayonnante correspondant au diamètre intérieur de l'antenne rayonnante dans la première zone est inférieur à un deuxième diamètre intérieur de l'antenne rayonnante correspondant au diamètre intérieur de l'antenne rayonnante dans une deuxième zone différente de la première zone et la partie électronique est circonscrite dans un cylindre dont l'axe de révolution est parallèle à l'axe de révolution de l'antenne rayonnante et dont le diamètre est supérieur ou égal au premier diamètre intérieur de l'antenne rayonnante.

En assurant que le cylindre circonscrit à la partie électronique ayant un axe de révolution parallèle à l'axe de révolution de l'antenne rayonnante et un diamètre supérieur ou égal au premier diamètre intérieur de l'antenne rayonnante, la première zone de l'antenne rayonnante constitue donc une butée au déplacement axial de la partie électronique. Le fait que cette première zone se situe de part et d'autre de la zone de l'antenne rayonnante située au droit de la partie électronique en raison du positionnement centrée de la partie électronique par rapport à l'antenne rayonnante assure de disposer alors de deux butées mécaniques situées axialement extérieurement à la partie électronique limitant tout mouvement axial de la partie électronique. du transpondeur radio fréquence De plus, le diamètre du cylindre circonscrit de la partie électronique étant situé à l'intérieur de l'antenne rayonnante au niveau de la deuxième zone, ce diamètre est nécessairement inférieur au deuxième diamètre intérieur de l'antenne rayonnante Ainsi, le déplacement radial de la partie électronique est borné par le deuxième diamètre intérieur de l'antenne rayonnante. En conclusion, le mouvement de la partie électronique est limité ce qui permet d'assurer la performance de communication du transpondeur radio fréquence tout en assurant une intégrité physique de la partie électronique et de l'antenne rayonnante du transpondeur radiofréquence. Enfin, l'endurance de l'objet accueillant ce transpondeur radiofréquence n'est pas non plus impacté par ce choix de conception. La manipulation des transpondeurs radiofréquences s'en trouve facilitée sans avoir besoin de précautions supplémentaires.

Selon un mode de réalisation spécifique, la communication avec le lecteur à émission radiofréquence s'effectue dans la bande des UHF et tout spécifiquement dans la gamme comprise entre 860 et 960Mhz.

En effet, dans cette bande de fréquence, la longueur de l'antenne rayonnante est inversement proportionnelle à la fréquence de communication. Et au-delà de ces bandes de fréquences, la communication radioélectriques est fortement perturbée voire impossible dans les matériaux élastomères. De ce fait, cela constitue le meilleur compromis entre la taille du transpondeur radiofréquence et sa communication radioélectrique notamment en champ lointain permettant d'avoir des distances de communication satisfaisantes pour l'industrie du pneumatique.

Selon un autre mode de réalisation particulier, la longueur L0 de l'antenne rayonnante est comprise entre 30 et 50 millimètres.

En effet, dans la gamme de fréquence entre 860 et 960 MHz et selon les permittivités diélectriques relatives des mélanges élastomères entourant le transpondeur radiofréquence, la longueur d'onde des ondes radioélectriques émises ou reçues par le transpondeur radiofréquence est située dans la fourchette entre 30 et 50 millimètres. Afin d'optimiser le fonctionnement de l'antenne rayonnante à ces longueurs d'ondes, il convient de parfaitement adapter la longueur de l'antenne rayonnante à la fréquence de résonance de l'antenne rayonnante.

Avantageusement, le diamètre d'enroulement de l'antenne rayonnante dans la première zone est compris entre 0,6 et 2,0 millimètres, de préférence entre 0,6 et 1,6 millimètres.

Cela permet de limiter le volume occupé par l'antenne rayonnante est donc d'augmenter l'épaisseur de mélange élastomère isolant électriquement autour du transpondeur radio fréquence. Bien entendu ce diamètre d'enroulement de l'antenne rayonnante dans la première zone peut être constant, variable, continument variable ou variable par morceaux. Il est préférable d'un point de vue de l'intégrité mécanique de l'antenne rayonnante que le diamètre soit constant ou continûment variable.

Avantageusement, le diamètre d'enroulement de l'antenne rayonnante dans la seconde zone est comprise entre 1,4 et 2,0 millimètres, de préférence entre 1,4 et 1, 8 millimètres.

Cette dimension du diamètre de la seconde zone de l'antenne rayonnante permet d'accueillir la partie électronique et notamment une bobine dont le cylindre circonscrit à un certain diamètre. Cela permet de limiter la dimension axiale du cylindre circonscrit à la partie électronique pour adapter l'impédance de l'antenne primaire à celle de la carte électronique de la partie électronique. De plus, dans un environnement contraint comme une enveloppe pneumatique, minimiser les dimensions du transpondeur radiofréquence permet d'augmenter l'épaisseur des mélanges élastomères l'entourant. Ceux-ci peuvent être isolant électriquement afin d'améliorer la performance radioélectrique du transpondeur radiofréquence.

Selon un mode de réalisation privilégié, le pas d'hélice d'au moins une boucle de l'antenne rayonnante dans la première zone de l'antenne rayonnante est compris entre 1 et 4 millimètres.

Cela permet d'une part d'assurer que le rapport du pas d'hélice sur le diamètre d'enroulement du ressort hélicoïdal dans la première zone de l'antenne rayonnante est inférieur à 3 garantissant un minimum d'élongation du ressort hélicoïdal. De plus, ce pas d'hélice peut aussi être constant ou variable sur toute la première zone de l'antenne rayonnante. Bien entendu, il est préférable que la pas d'hélice soit continûment variable ou avec des transitions de faible variation pour éviter des points singuliers dans l'antenne rayonnante qui représenteraient des faiblesses mécaniques de l'antenne rayonnante.

Préférentiellement, le pas de l'antenne rayonnante dans la deuxième zone de l'antenne rayonnante est inférieur à 1,5 millimètres.

Cela permet d'assurer que le rapport entre le pas d'hélice et le diamètre d'enroulement de l'antenne rayonnante dans cette deuxième zone soit inférieur ou égal à 0,8 favorisant les caractéristiques électromagnétiques de l'antenne rayonnante au lieu de ces caractéristiques radioélectriques.

Selon un mode de réalisation avantageux, le diamètre du fil de l'antenne rayonnante est comprise entre 0, 05 et 0, 25 millimètres, idéalement entre 0, 12 et 0, 22 millimètres.

Dans cette gamme de fil, on assure d'une part que la résistance des pertes sera faible améliorant ainsi les performances radioélectriques de l'antenne rayonnante. De plus, limiter le diamètre du fil permet d'éloigner l'antenne rayonnante des conducteurs électriques en augmentant l'épaisseur des mélanges élastomères isolant électriquement. Cependant, il est nécessaire de conserver une certaine résistance au fil pour supporter les contraintes thermomécaniques qu'il subira dans un environnement fortement sollicitant comme l'enveloppe pneumatique sans optimiser la limite à rupture du matériau de ces fils, généralement en acier doux. Cela permet d'assurer un compromis technico économique satisfaisant de l'antenne rayonnante.

L'invention a aussi pour objet un patch d'identification constitué d'un transpondeur radiofréquence noyé dans une masse souple et isolante électriquement de mélanges élastomères.

On entend ici par le terme isolant électriquement que la conductivité électrique du mélange élastomère est en deçà du seuil de percolation des charges conductrices du mélange.

Ainsi, on constitue un patch d'identification qui facilite la mise en place du transpondeur radio fréquence dans des objets à identifier comprenant des parties en matériau à base de mélange d'élastomère. Une couche de gomme de liaison usuelle pourra être employée si nécessaire, pour solidariser le patch d'identification à l'objet à identifier tel un pneumatique.

De plus, les caractéristiques de rigidité et de conductivité électrique du mélange élastomère assurent une insertion mécanique et une isolation électrique de qualité du transpondeur radiofréquence au sein des composants de l'objet à identifier. Ainsi le fonctionnement du transpondeur radiofréquence n'est pas perturbé par l'objet à identifier.

L'invention a aussi pour objet, un procédé de fabrication du transpondeur radiofréquence qui comporte les étapes suivantes :
- on connecte électriquement une puce électronique sur un circuit imprimé afin de constituer une carte électronique ;
- on réalise à l'aide d'un fil conducteur une bobine définissant une antenne primaire ;
- on connecte électriquement l'antenne primaire à la carte électronique ;
- on noie au moins une partie de l'antenne primaire et la carte électronique dans une masse rigide et isolante électriquement telle une résine thermodurcissable afin de constituer la partie électronique du transpondeur radiofréquence ;
- on réalise une première partie d'une antenne rayonnante de longueur L0 et d'axe de révolution U constituée d'une ressort hélicoïdal, selon un mode de réalisation spécifique en commençant par la boucle située la plus extérieurement par rapport au plan médian de l'antenne rayonnante, comprenant la première moitié de la première zone de l'antenne rayonnante et au moins une première partie de la seconde zone de l'antenne rayonnante ;
- on positionne axialement et radialement la partie électronique du transpondeur radiofréquence par rapport à la première partie de l'antenne rayonnante, selon un mode de réalisation spécifique la partie électronique est mise en appui sur la boucle de la première zone de l'antenne rayonnante située la plus intérieurement par rapport au plan médian de l'antenne rayonnante, de telle façon que l'antenne primaire de la partie électronique étant circonscrite dans un cylindre présentant un axe et un plan médian qui lui est perpendiculaire, l'axe de l'antenne primaire et l'axe de révolution U de l'antenne rayonnante sont sensiblement parallèles et le plan médian de l'antenne primaire est sensiblement centrée par rapport au milieu de la longueur L0 de l'antenne rayonnante. ;
- on finalise la seconde partie de l'antenne rayonnante, avantageusement en commençant par la deuxième partie de la deuxième zone de l'antenne rayonnante, comprenant au moins la seconde moitié de la première zone de l'antenne rayonnante.

Ainsi, la fabrication du transpondeur radio fréquence est simplifiée en réalisant séparément la partie électronique et l'antenne rayonnante du transpondeur radiofréquence. De plus, l'étape d'assemblage des deux composants ne nécessite aucune connexion mécanique ou électrique entre les deux composants ce qui réduit drastiquement les coûts de fabrication du transpondeur radiofréquence.

L'étape de réalisation de l'antenne rayonnante est effectuée en trois étapes. Entre les deux étapes de réalisation de l'antenne rayonnante la partie électronique réalisée préalablement, est positionnée par rapport à la première partie de l'antenne rayonnante réalisée. Ensuite, la deuxième partie de l'antenne est réalisée en présence de la partie électronique. Ce procédé est facilement automatisable.

L'invention porte aussi sur un autre procédé de fabrication du transpondeur radiofréquence qui comporte les étapes suivantes :
- on connecte électriquement une puce électronique sur un circuit imprimé afin de constituer une carte électronique ;
- on réalise à l'aide d'un fil conducteur une bobine constituant une antenne primaire ;
- on connecte électriquement l'antenne primaire à la carte électronique ;
- on noie au moins une partie de l'antenne primaire et la carte électronique dans une masse rigide et isolante électriquement telle une résine thermodurcissable afin de constituer la partie électronique du transpondeur radio fréquence ;
- on réalise une antenne rayonnante de longueur L0 et d'axe de révolution U constituée d'un ressort hélicoïdal comprenant une deuxième zone, définie par un pas d'hélice P2 et un diamètre d'enroulement D2, comprise entre deux parties d'une première zone de l'antenne rayonnante, définie par un pas d'hélice P1 et un diamètre d'enroulement D1;
- on identifie une zone de transition, comprenant au moins une spire du ressort hélicoïdal, entre une partie de la première zone et la deuxième zone de l'antenne rayonnante à l'aide de moyens de détection, par exemple des moyens optiques ou des capteurs de distance de type mécanique ou magnétique, de la variation du diamètre d'enroulement et/ou de la variation du pas d'hélice ;
- on identifie un point de pliage situé sur la spire de la zone de transition; préférentiellement situé sur la moitié de la spire se situant la plus proche de la deuxième zone de l'antenne rayonnante ;
- on effectue un pliage du ressort hélicoïdal d'un premier angle, préférentiellement compris entre 70 à 110°, autour d'un axe perpendiculaire à l'axe de révolution U passant par le point de pliage entre les parties du ressort hélicoïdal situées en amont et en avale du point de pliage afin de constituer une ouverture dans la partie amont du ressort hélicoïdal, comprenant le deuxième zone de l'antenne rayonnante, dont le diamètre inscrit est supérieur ou égal au diamètre du cylindre circonscrit à la partie électronique ;
- On introduit la partie électronique dans la partie amont du ressort hélicoïdal par l'intermédiaire de l'ouverture de sorte que l'extrémité axiale du cylindre circonscrit à la partie électronique située le plus extérieurement par rapport à la partie amont du ressort hélicoïdal soit située à une distance inférieure au pas d'hélice P2 au-dessus d'un plan dont la normale est l'axe de révolution de la partie amont passant par le point de pliage;
- On plie de nouveau le ressort hélicoïdal au niveau du point de pliage d'un second angle opposé au premier angle autour de l'axe perpendiculaire à l'axe de révolution de la partie amont du ressort hélicoïdal passant par le point de pliage dont l'amplitude est au moins égale ou supérieure à l'amplitude du premier angle de sorte que les axes de révolution des parties amont et avale du ressort hélicoïdal soient colinéaires.

Ce second mode de réalisation permet de dissocier l'étape de réalisation du ressort hélicoïdal formant l'antenne rayonnante de l'étape d'assemblage de la partie électronique au sein de l'antenne rayonnante ce qui permet d'optimiser les rendements industriels de fabrication du ressort hélicoïdal. L'assemblage peut ainsi être réalisé sur un poste dédié.

Selon la nature du métal constituant le ressort hélicoïdal et de ses propriétés élasto-plastiques, il conviendra de choisir le second angle de pliage afin que les deux parties situées en amont et en aval du point de pliage soient colinéaires après le second pliage du ressort hélicoïdal afin de reconstituer le ressort hélicoïdal d'axe de révolution U. L'alignement des deux axes de révolution des parties amont et avale est effectuée dans les limites de tolérance admissibles pour que le fonctionnement radio fréquence de l'antenne rayonnante ne soit pas perturbée, ce qui correspondant à un angle entre les axes de révolution des parties amont et avale du ressort hélicoïdal inférieure à 20°.

La potentielle plastification localisée du ressort hélicoïdal à proximité du point de pliage ne perturbe pas le comportement mécanique du ressort hélicoïdal qui par nature travaille en grand déplacement. Cette zone ne doit pas en principe travailler dans le domaine de plasticité du matériau du ressort hélicoïdal.

La localisation du point de pliage au niveau de la zone de transition, à proximité de la deuxième zone de l'antenne rayonnante, permet d'assurer un centrage et une coaxialité de la partie électronique par rapport à la deuxième zone du ressort hélicoïdal ce qui est favorable au bon fonctionnement électromagnétique entre les antennes primaire et rayonnante.

De plus, quel que soit le procédé de fabrication, sur un poste industriel à enrouler les ressorts, il est facile de modifier à la fois le pas d'hélice et le diamètre d'enroulement du ressort hélicoïdal à chaque boucle à l'aide d'un même fil pour des fils d'acier compris entre 0,05 et 0, 25 millimètres de diamètre, de manière préférentielle le diamètre est compris entre 0,11 et 0,22 millimètres pour un fil revêtue ou non.

Selon un mode de réalisation particulier, l'un quelconque des procédés selon l'invention comprend aussi une étape de revêtir la partie d'antenne primaire non noyée dans la masse rigide et isolante électriquement d'un matériau isolant électriquement.

Cette caractéristique est utile pour obtenir un couplage électromagnétique de qualité entre l'antenne rayonnante et l'antenne primaire en empêchant tout contact physique entre les parties conductrices des deux antennes.

De préférence, l'un quelconque des procédés de fabrication selon l'invention comprend une étape pour ajouter d'un circuit électronique additionnel comprenant des éléments inductifs et/ou capacitifs sur la carte électronique, idéalement un circuit galvanique en forme de méandre afin d'adapter l'impédance électrique de l'antenne primaire à l'impédance électrique de la carte électronique.

Cela permet d'améliorer l'efficacité de l'antenne primaire. Au cas où la réalisation de l'antenne primaire permet de mieux adapter l'impédance électrique de l'antenne à celle de la carte électronique sans que cela soit parfait, il est possible d'additionner un circuit électronique, qui peut être simplement galvanique, à la carte électronique pour parfaitement adapter électriquement les impédances des deux composants.

L'invention a aussi pour objet un procédé de fabrication du patch d'identification dans lequel un transpondeur radiofréquence est incorporé dans une masse d'au moins un mélange élastomère souple et isolant électriquement par un procédé d'injection, de compression ou d'extrusion.

Ainsi, quel que soit l'état de l'élastomère, cru ou réticulé, il est facile d'incorporer le patch d'identification à un objet à identifier, tel un pneumatique, comprenant des produits élastomères en employant si nécessaire des techniques classiques d'adhésion élastomère/élastomère. Cette incorporation peut avoir lieu soit lors de la phase de fabrication de l'objet, comme par exemple au sein d'une ébauche crue d'un pneumatique, et en particulier avant la réticulation ou la vulcanisation des élastomères soit lors d'une étape postérieure au procédé de fabrication de l'objet à identifier comme par exemple directement sur les faces interne ou externe du pneumatique.

### Description brève des dessins

L'invention sera mieux comprise à la lecture de la description qui va suivre dans le cas d'une application à des bandages pneumatiques. Cette application est donnée uniquement à titre d'exemple et faite en se référant aux figures annexées dans lesquelles les mêmes numéros de référence désignent partout des parties identiques et dans lesquelles :
- La figure 1 présente une vue en perspective d'un transpondeur radiofréquence de l'état de la technique dans une configuration où la partie électronique est située à l'intérieur de l'antenne rayonnante ;
- La figure 2 présente une vue en perspective d'un transpondeur radiofréquence selon l'invention ;
- La figure 3 est un autre exemple de transpondeur radiofréquence selon l'invention présentant un rapport pas d'hélice sur diamètre d'enroulement inférieure à 0,8 dans la zone centrale de l'antenne rayonnante ;
- La figure 4 est un dernier exemple de transpondeur radiofréquence selon l'invention présentant à un certain nombre de spécificités ;
- La figure 5 est une vue éclatée d'un patch d'identification ;
- La figure 6 présente un graphe de la puissance électrique transmise à trois transpondeurs radio fréquences selon la bande de fréquence d'observation ;
- La figure 7 est un synoptique d'un procédé de fabrication d'un patch d'identification comprenant un transpondeur radiofréquence selon l'invention. ; et
- Les figures 8 et 9 sont des vues en coupe de la deuxième zone de l'antenne rayonnante du transpondeur radiofréquence selon l'invention pour des conceptions différentes de la partie électronique.

### Description détaillée de modes de réalisation

Dans ce qui suit, les termes « pneumatique » et « bandage pneumatique » sont employés de façon équivalente et concernent tout type de bandage pneumatique ou non pneumatique (en anglais « tire », « pneumatic tire », « non-pneumatic tire »)

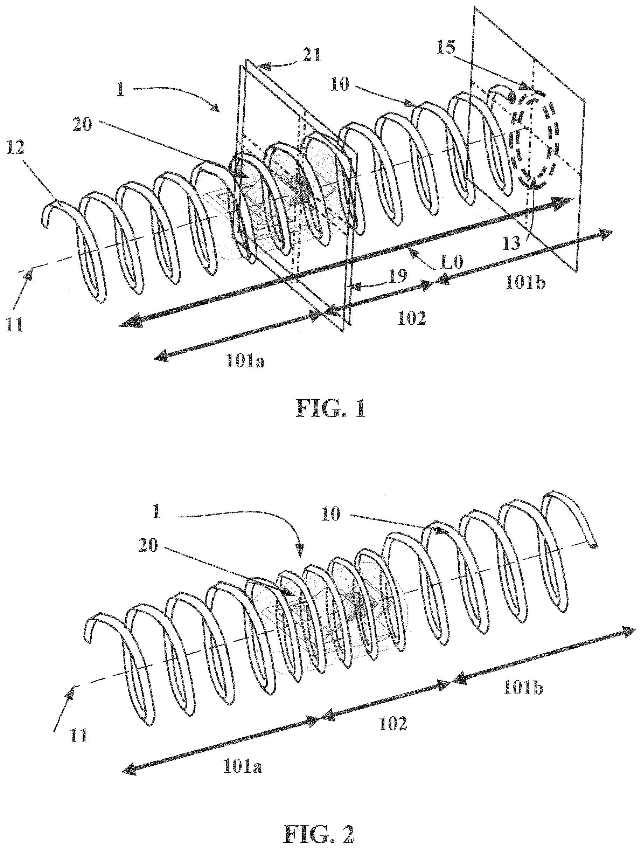

La figure 1 présente un transpondeur radio fréquence 1 de l'état de la technique dans une configuration où la partie électronique 20 est située à l'intérieur de l'antenne rayonnante 10. L'antenne rayonnante 10 est constituée d'un fil en acier 12 qui a été déformé plastiquement afin de former un ressort hélicoïdal présentant un axe de révolution 11. Le ressort hélicoïdal est défini tout d'abord par un diamètre d'enroulement du fil revêtu et un pas d'hélice. Ces deux paramètres géométriques du ressort hélicoïdal sont ici constants. Ainsi, on détermine précisément des diamètres intérieurs 13 et extérieur 15 du ressort hélicoïdal en prenant en comptant le diamètre du fil. La longueur du ressort L0 correspond ici à la demi-longueur d'onde du signal de transmission du transpondeur radiofréquence 1 dans une masse de mélange élastomère. Ainsi on peut définir un plan médian 19 au ressort hélicoïdal perpendiculaire à l'axe de révolution 11 séparant l'antenne rayonnante 10 en deux parties égales. La forme géométrique de la partie électronique 20 est circonscrite dans un cylindre dont le diamètre est inférieur ou égal au diamètre intérieur 13 du ressort hélicoïdal. L'enfilement de la partie électronique 20 dans l'antenne rayonnante 10 s'en trouve facilité. Le plan médian 21 de l'antenne primaire se trouve sensiblement superposé au plan médian 19 de l'antenne rayonnante 10. Enfin l'axe de l'antenne primaire est sensiblement parallèle à l'axe de révolution 11 de l'antenne rayonnante 10.On peut diviser l'antenne rayonnante en deux zones distinctes. La première zone 101 de l'antenne rayonnante 10 où le ressort hélicoïdal n'est pas situé au droit de la partie électronique 20. Cette première zone 101 de l'antenne rayonnante 10 comprend deux parties 101a et 101b sensiblement équivalentes encadrant axialement la seconde zone 102 de l'antenne rayonnante 10.

La figure 2 est un premier transpondeur radiofréquence 1 selon l'invention qui a comme caractéristique distinctive par rapport au transpondeur radio fréquence de l'état de la technique de la figure 1 que le pas d'hélice de la deuxième zone 102 de l'antenne rayonnante10 est réduit de 20 pourcent par rapport au pas d'hélice constant de l'antenne rayonnante du transpondeur radiofréquence de l'état de la technique. De surcroît, afin de ne pas modifier la forme générale du ressort hélicoïdal, le diamètre d'enroulement de la deuxième zone 102 de l'antenne rayonnante 10 a été adaptée à la diminution du pas d'hélice du ressort hélicoïdal afin que le rapport pas d'hélice sur diamètre d'enroulement reste constant par rapport au transpondeur radiofréquence de la figure 1. Ceci est obtenu par une diminution d'environ 20 pourcent du diamètre d'enroulement du ressort hélicoïdal de la figure 1. De ce fait, les propriétés radioélectriques de l'antenne rayonnante 10 n'ont pas été affectées par ces modifications. Cependant, la diminution du diamètre d'enroulement de la deuxième zone 102 de l'antenne rayonnante 10 a conduit à réduire la distance entre l'antenne rayonnante 10 et la partie électronique 20 et donc aussi l'antenne primaire. Cette diminution de la distance entre les antennes est possible en raison du resserrement du pas d'hélice de l'antenne rayonnante 10. En effet cela autorise une diminution des tolérances de fabrication associées au diamètre d'enroulement permettant le rapprochement des antennes sans pour autant impacter les coûts de fabrication de l'antenne rayonnante. En conclusion, ce premier mode de réalisation de l'invention met en exergue l'optimisation du transfert énergétique de type électromagnétique entre les deux antennes en améliorant l'efficacité de la surface d'échange entre les deux antennes. Cette amélioration est obtenue d'une part par l'augmentation des spires disponibles de l'antenne rayonnante 10 pour effectuer le transfert énergétique avec l'antenne primaire et d'autre part par la diminution de la distance entre l'antenne primaire et l'antenne rayonnante.

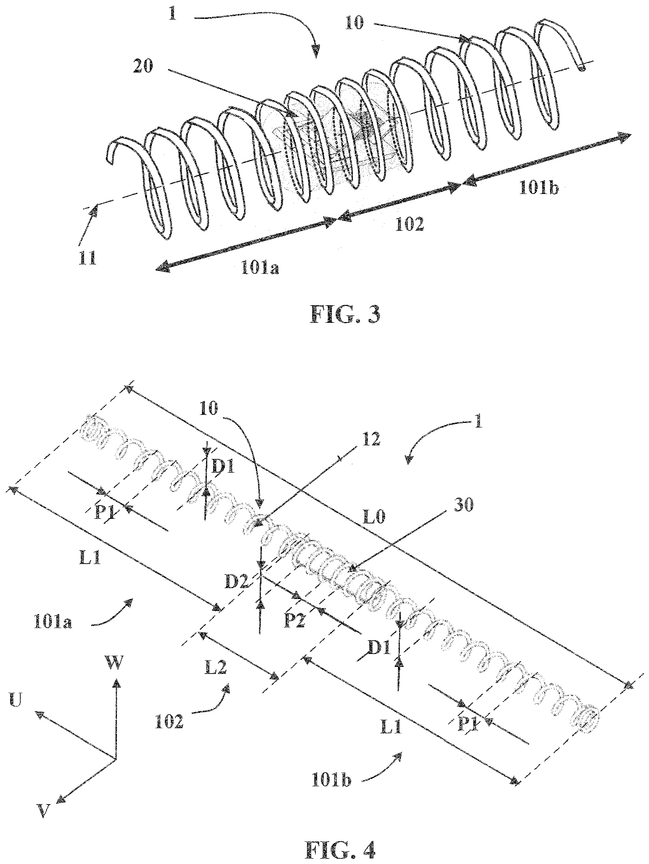

La figure 3 est un autre mode de réalisation de transpondeur radiofréquence 1 selon l'invention qui a comme caractéristique distinctive par rapport au transpondeur radiofréquence de l'état de la technique de la figure 1 que , tout d'abord, le pas d'hélice de la deuxième zone 102 de l'antenne rayonnante a été réduit de 20 pourcents et que , étant donné que le diamètre d'enroulement de la deuxième zone 102 n'a pas été modifié par rapport au transpondeur radiofréquence de la figure 1, le rapport du pas d'hélice sur le diamètre d'enroulement se voit diminué lui aussi de 20 pourcents et se retrouve ainsi en dessous de 0,8. La conséquence de cette modification du rapport pas d'hélice sur diamètre d'enroulement est que l'inductance de l'antenne rayonnante 10 à la fréquence de résonance se voit amélioré de 20 pourcents permettant la génération d'un champ magnétique induit par l'antenne rayonnante amélioré. Cela est à l'origine d'une amélioration du couplage électromagnétique entre les deux antennes. Enfin, la surface de transfert énergétique de l'antenne rayonnante 10 se trouve aussi augmentée par l'augmentation du nombre de spires disponibles de l'antenne rayonnante 10 pour une même longueur élémentaire de l'antenne primaire.

La figure 4 est une illustration d'un transpondeur radiofréquence 1 selon l'invention fonctionnant dans la gamme de fréquence entre 860 et 960 Mhz destinée à être incorporée dans une enveloppe pneumatique par l'intermédiaire d'un patch d'identification en matériaux élastomère. Pour faciliter la performance de radiocommunication et l'intégrité physique du transpondeur radiofréquence 1 au sein de l'enveloppe pneumatique, il sera préférable de disposer l'axe de révolution de l'antenne rayonnante 10, parallèle à la direction U dans une direction perpendiculaire aux fils de la nappe carcasse de l'enveloppe pneumatique à structure radiale, en particulier si ceux-ci sont métalliques.

Le transpondeur radiofréquence 1 présente ici une antenne rayonnante 10 et une partie électronique située à l'intérieur de l'antenne rayonnante 10. La partie électronique comprend une puce électronique connectée à un circuit imprimé. Une antenne primaire constituée d'un fil conducteur comprenant dix-sept spires rectangulaires connectées au circuit imprimé. La face opposée du circuit imprimé à l'antenne primaire comprend un circuit galvanique en forme de méandre constituant une ligne de 10 millimètres de long et de 1 millimètre de large. Enfin, le diamètre du cylindre circonscrit de l'antenne primaire est de 0,8 millimètres. Aussi bien le nombre de spires complètes de l'antenne primaire que le circuit galvanique sur la face opposée du circuit imprimé permet d'adapter l'impédance de l'antenne primaire à celle de la carte électronique.

La carte électronique ainsi constituée est noyée dans une masse 30 en résine époxy assurant la fiabilité mécanique des composants électroniques et l'isolation électrique de la carte électronique. Le cylindre circonscrit à la masse rigide 30 a un diamètre de 1,15 millimètres et une longueur de 6 millimètres.

La longueur L0 de l'antenne rayonnante 10 est ici de 45 millimètres et correspond à la demi-longueur d'onde des ondes radioélectriques à la fréquence de 915 MHz dans un milieu de permittivité diélectrique relatif environ égale à 5. L'antenne rayonnante 10 est réalisée à l'aide d'un fil d'acier 12 de diamètre 0,225 millimètre revêtu en surface d'une couche de laiton.

L'antenne rayonnante 10 se décompose en deux zones principales. La première zone 101 correspond à la section de l'antenne rayonnante ne se situant pas au droit de la partie électronique. Elle comprend deux sous zones 101a et 101b entourant de part et d'autre la masse 30 rigide et isolante électriquement.

Chaque sous zone 101a 101b d'une longueur L1 de 19 millimètres comprend 12 spires circulaires d'un diamètre d'enroulement D1 constant de 1,275 millimètres. Cela détermine des diamètres intérieur et extérieur de respectivement 1,05 et 1,5 millimètres. Le pas d'hélice P1 des spires circulaires est de 1,55 millimètres. Ainsi, le rapport du pas d'hélice P1 sur le diamètre d'enroulement D1 des spires est de 1,21. Les extrémités axialement extérieures de chaque sous zone 101a et 101b se terminent par 2 spires jointives. De ce fait, le rapport élevée assure de maximiser l'efficacité des propriétés radioélectriques de l'antenne rayonnante 10 dans cette zone 101. De plus, le contact entre les spires situées le plus extérieurement à l'antenne rayonnante 10 empêche l'entrelacement des ressorts hélicoïdaux entre eux lors de la manipulation des transpondeurs radio fréquences. Comme la majorité des spires de la première zone 101 de l'antenne rayonnante 10 présente un rapport supérieur à 0,8, la performance radioélectrique du transpondeur radiofréquence 1 s'en trouve nettement améliorée.

Sur la seconde zone 102 de l'antenne rayonnante 10 correspondante à la section de l'antenne rayonnante 10 se situant au droit de la partie électronique, l'antenne rayonnante 10 présente une longueur de 7 millimètres. Le ressort hélicoïdal présente un pas d'hélice P2 constant de 1 millimètre et un diamètre d'enroulement D2 constant de 1,575 millimètres. Ainsi, le diamètre intérieur du ressort hélicoïdal de la deuxième zone de l'antenne rayonnante est de 1,35 millimètres Cela permet d'avoir un rapport du pas sur le diamètre d'enroulement constant de l'ordre de 0,63 Ce rapport permet de maximiser l'inductance de la deuxième zone 102 de l'antenne rayonnante10 par rapport à la première zone 101 ce qui permet une meilleure efficacité de couplage électromagnétique avec la partie électronique.

Dans ce cas particulier, le diamètre intérieur de l'antenne rayonnante 10, égal à 1,05, de la première zone 101 est inférieur au diamètre de la masse 30, représentant le cylindre circonscrit de la partie électronique, égal à 1,15 millimètres. De ce fait, les sous zones 101a et 101b de la première zone 101 de l'antenne rayonnante 10 représentent des butées mécaniques au mouvement axial de la masse 30 à l'intérieur de l'antenne rayonnante 10. La mise en place de la partie électronique 20 sera réalisée, dans un premier mode de réalisation par enfilement de la masse 30 rigide et isolante dans l'antenne rayonnante 10.

Cette mise en place est possible par exemple en ayant au préalable plié élastiquement l'une des sous zones 101a ou 101b de la première zone 101 de l'antenne rayonnante 10 d'un angle de 45 degrés par rapport à l'axe de révolution de l'antenne rayonnante 10. Ce pli est réalisé au droit de la zone de transition entre la première zone 101 et la deuxième zone 102 de l'antenne rayonnante 10. Ainsi, l'ouverture créée par ce pliement est suffisante pour introduire la masse 30 à l'intérieur de la deuxième zone 102 de l'antenne rayonnante 10. Il suffit de relâcher la première zone 101a de l'antenne rayonnante après cette introduction pour obtenir le transpondeur radio fréquence de la figure 4.

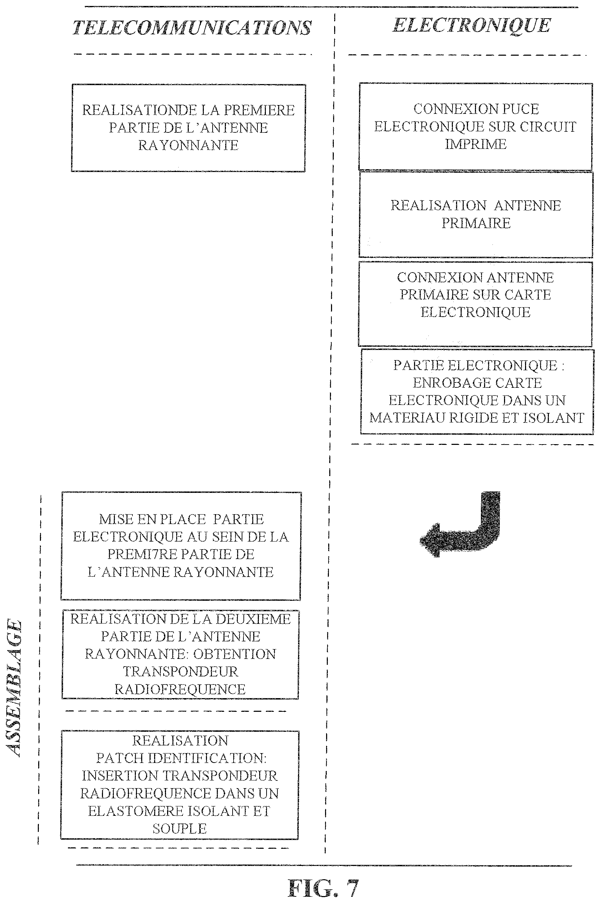

Un second mode de mise en place de la partie électronique enrobé dans sa masse 30 isolante électriquement à l'intérieure de l'antenne rayonnante 10 est illustré à l'aide du synoptique présenté en figure 7.

De plus, le diamètre du cylindre circonscrit à l'antenne primaire est bien supérieur au tiers du diamètre intérieur du ressort hélicoïdal de la deuxième zone 102 de l'antenne rayonnante. Bien que le cylindre circonscrit à l'antenne primaire ne soit pas coaxial à l'axe de révolution de l'antenne rayonnante 10, il lui est sensiblement parallèle. Et, la distance minimale entre la deuxième zone 102 de l'antenne rayonnante 10 et l'antenne primaire est inférieure à 0,3 millimètres, bien inférieur au quart du diamètre intérieur de l'antenne rayonnante 10. Cette proximité des antennes est autorisée par le pas P2 resserré appliqué à la deuxième zone 102 de l'antenne rayonnante 10 permettant d'obtenir une tolérance plus petite des dimensions du ressort en particulier le diamètre d'enroulement D2. De plus cette proximité assure un couplage électromagnétique entre les deux antennes de meilleure qualité. Bien entendu, ce couplage électromagnétique aurait pu être amélioré en utilisant des spires de forme identique entre l'antenne primaire et l'antenne rayonnante, comme par exemple des spires circulaires. Ce couplage aurait été optimisée aussi en rendant coaxial les axes des deux antennes ce qui revient à placer la carte électronique à l'intérieur de l'antenne primaire pour minimiser la dimension axiale de la partie électronique. Ainsi, la qualité de la surface de transfert d'énergie électromagnétique entre les deux antennes aurait été optimale.

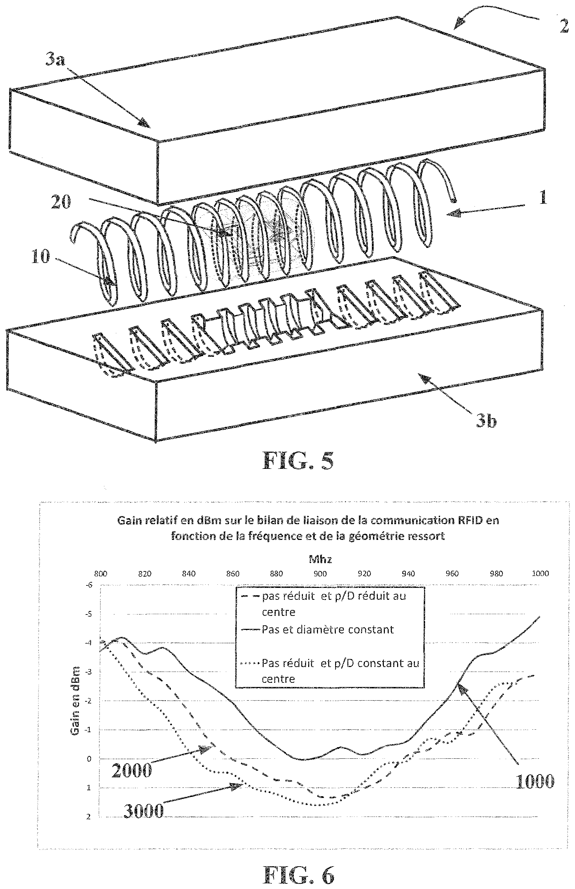

La figure 5 présente un patch d'identification 2 comprenant un transpondeur radiofréquence 1 selon l'invention noyé dans une masse souple 3 en matériau élastomère isolant électriquement représentée par les plaques 3a et 3b. Le transpondeur radiofréquence 1 est généralement placé au milieu du patch 2 afin de maximiser la plus petite distance entre la première zone de l'antenne rayonnante 10 et la surface externe du patch d'identification 2.

Dans le cas où le rapport entre le pas d'hélice et le diamètre d'enroulement de la boucle de la première zone de l'antenne rayonnante 10 est augmenté en réduisant le diamètre d'enroulement du fil d'acier, le volume occupé par le transpondeur radiofréquence 1 au sein de la masse 3 en matériaux élastomère est diminué.

Cela permet, dans une première application , de réduire l'épaisseur de chacune des plaques 3a et 3b du patch d'identification 2 en gardant la même distance entre la surface externe du patch d'identification 2 et la première zone 101 de l'antenne rayonnante 10. Cette réduction de l'épaisseur du patch d'identification 2 facilitera son introduction au sein d'un objet à identifier tout en conservation le même potentiel d'isolation électrique. Dans une seconde application, cela permet d'augmenter la distance entre la première zone 101 de l'antenne rayonnante 10 et la surface externe du patch d'identification 2. Cette seconde application permet d'améliorer la performance radioélectrique et donc la performance de communication du transpondeur radiofréquence 1 placé dans le patch d'identification 2. En effet, l'isolation électrique du patch 2 est proportionnelle à la distance entre la première zone 101 de l'antenne rayonnante 10 et la surface externe du patch 2. Le fonctionnement radioélectrique du transpondeur radiofréquence 1 est amélioré, ou égal si cette distance a atteint son asymptote d'efficacité, par une meilleure isolation électrique du patch d'identification 2.

La figure 6 est un graphe de la puissance électrique transmise par différents transpondeurs radiofréquences situés à l'intérieur d'une enveloppe pneumatique de marque Michelin XINCITY de dimension 275/70 R22.5 à un lecteur radiofréquence externe. La fréquence de communication des transpondeurs radiofréquences est centrée sur 915 MHz. Le protocole de mesure employé correspond à la norme ISO/IEC 18046-3 intitulé « Identification Electromagnetic Field Threshold and Frequency Peaks ». Les mesures ont été effectuées pour un balayage en fréquence large et non ponctuellement comme habituellement. L'axe des abscisses représente la fréquence du signal de communication. L'axe des ordonnées est la puissance électrique reçue par le lecteur radiofréquence exprimée en décibel relativement à la puissance électrique maximale transmise par un transpondeur radiofréquence actuel de l'état de l'art. La courbe en continu 1000 représente la réponse d'un transpondeur radiofréquence selon le document cité de l'état de la technique. La courbe en tirets 2000 représente la réponse d'un transpondeur selon l'invention pour un même signal émis par le lecteur radiofréquence. En fait, ce second transpondeur correspond au transpondeur de la figure 2 pour lequel le rapport du pas d'hélice sur le diamètre d'enroulement du ressort hélicoïdal pour la deuxième zone est resté identique au rapport pour un transpondeur radiofréquence de la figure 1. La réponse de ce deuxième transpondeur met en exergue l'efficacité du transfert énergétique entre les deux antennes à iso caractéristiques électromagnétiques de l'antenne rayonnante Enfin, la courbe en pointillés 3000 représente la réponse d'un transpondeur selon l'invention pour un même signal émis par le lecteur radiofréquence Ce troisième transpondeur a comme particularité que le rapport du pas d'hélice sur le diamètre d'enroulement du ressort hélicoïdal pour la deuxième zone de l'antenne rayonnante a été diminué pour être inférieur à 0,8 comme illustré dans la figure 3. On note un gain d'environ deux décibels en faveur des transpondeurs radio fréquences selon l'invention par rapport au transpondeur radiofréquence cité de l'état de l'art sur la fréquence de communication du lecteur radiofréquence. Le gain minimal d'environ un décibel est observé sur une bande de fréquences élargie autour de la fréquence de communication. Entre les deux conceptions de transpondeur radiofréquence, on note plus un décalage de la fréquence de résonance qu'une amélioration sur toute la bande pour l'une ou l'autre des conceptions.

La figure 7 est un synoptique d'un procédé de fabrication d'un patch d'identification 2 selon l'invention. L'obtention du patch d'identification 2 nécessite la fabrication initiale d'un transpondeur radiofréquence 1 selon l'invention. Les diverses étapes chronologiques de la fabrication du transpondeur radiofréquence 1 puis celles du patch d'identification 2 sont identifiées. On délimite nettement les étapes liées aux métiers des télécommunications ou de l'électronique de celles de l'assemblage comme par exemple la mise en place sur enveloppe pneumatique qui peut être réalisé par le manufacturier de pneumatique.

En s'appuyant sur la figure 7 représentant un synoptique de fabrication d'un patch d'identification 2, on distingue trois phases indépendantes et successives.

Dans une première phase, on réalise la partie électronique 20 du transpondeur radiofréquence 1, qui assurera l'interrogation et la réponse de la puce électronique vers l'antenne rayonnante 10. La transmission d'information entre l'antenne rayonnante 10 et la partie électronique 20 est réalisée par couplage électromagnétique à l'aide d'une antenne primaire.

Ce dispositif électronique, encapsulé dans la masse rigide 30, est composé d'une part d'une puce électronique et d'autre part d'une antenne primaire.

La partie électronique 20 est destinée à se situer à l'intérieur de l'antenne rayonnante 10. Dans un premier mode de réalisation préférentiel, on emploie le procédé leadframe en matière de support électromécanique à l'antenne primaire et à la puce électronique représentant l'équivalent d'un circuit imprimé. Ce procédé est particulièrement bien adapté dans cette configuration en raison de sa facilité de miniaturisation.

La première étape consiste à composer la carte électronique. Pour cela on fixe, en premier lieu, sur la grille ou leadframe la puce électronique à l'aide d'une colle conductrice par exemple la H20E de la marque Tedella. Et le câblage de la puce est effectué par la technique de wire-bonding, c'est à-dire la réalisation d'un pont électrique par l'intermédiaire, par exemple, de fils en or de diamètre 20 micromètres entre la puce électronique et le circuit imprimé représenté par la grille. On peut alors mesurer l'impédance électrique de la carte électronique aux points de fixation de l'antenne primaire sur la grille à l'aide d'un appareil électrique adaptée comme un impédancemètre.

La deuxième étape consiste à réaliser l'antenne primaire. Dans un premier mode de réalisation, cette antenne sera constituée d'une bobine à spires circulaires construite directement sur la grille (lead frame) par la technologie du câblage de fil (wire-bonding). Une autre variante d'antenne primaire consiste à créer une antenne à l'aide de deux segments filaires de cuivre connectés à la carte électronique au moyen d'une technique de soudure métallique employée dans l'industrie électronique et orientés dans des directions opposées pour former un dipôle. Pour la construction de la bobine à spires sur la grille, un fil d'or de 20 micromètre de diamètre sera employé, on aurait pu employer aussi du fil d'aluminium ou de cuivre palladium, pour réaliser les demi-spires de la bobine sur la face verso de la grille. Le diamètre de la demi-spire est de 400 micromètres, on emploie la technique des ultrasons classique dans l'industrie des semi-conducteurs pour connecter électriquement les fils d'or sur la grille. Ensuite sur la face recto de la grille, on réalise l'autre demi spire afin d'obtenir une bobine cylindrique à 15 spires de diamètre 400 micromètres.

Le nombre de spires de l'antenne primaire est déterminé de telle sorte que l'impédance électrique de l'antenne primaire soit adaptée à l'impédance électrique de la carte électronique comprenant au moins le circuit imprimé représenté par la grille et la puce électronique. Dans notre cas, l'impédance électrique de la puce électronique seule est un nombre complexe ayant une valeur par exemple de (10 - j^{∗}150) ohms. Ainsi une bobine de 15 spires de diamètre 400 micromètres correspond à une bonne adaptation de l'impédance électrique de la carte électronique construite sur une grille de connexions en cuivre.

La dernière étape de réalisation de la partie électronique 20 consiste à encapsuler le circuit imprimé, les composants qui lui sont connectés et l'antenne primaire à l'aide d'une résine époxy haute température, dans une masse rigide 30. Pour cela, on utilise la technologie du globtop bien connue d'un homme du métier. La masse rigide 30 forme une capsule protégeant la carte électronique du transpondeur radiofréquence 1.

Dans un autre mode de réalisation du dispositif électronique destiné à être placé à l'intérieur de l'antenne rayonnante 10, on commence tout d'abord par la réalisation de l'antenne primaire à l'aide d'un fil de cuivre de 180 micromètre revêtu d'une gaine thermoplastique isolante électriquement. On enroule ce fil sur un noyau tubulaire rigide et isolant électriquement en réalisant une bobine d'une dizaine de spires de diamètre extérieur de 1 millimètre avec un pas d'hélice de 0,2 millimètre se terminant par deux extrémités non revêtues. Il est alors possible d'évaluer la surface périphérique réelle s de l'antenne primaire à l'aide du diamètre du fil de cuivre, du diamètre extérieur de l'antenne, du pas d'hélice et du nombre total de spires. Dans ce cas, le rayon de la surface hélicoïdale est de 500 micromètres puisque l'antenne primaire est située à l'intérieur de l'antenne rayonnante 10.

On réalise la carte électronique à l'aide d'un support flexible. Dans une première variante, la puce électronique est fixée à l'aide d'une colle conductrice de type ACP (acronyme Anisotropic Conductive Paste) ne nécessitant pas de câblage électrique entre la puce et la carte électronique. Dans une seconde variante, la puce électronique est fixée à l'aide d'une colle non conductrice de montage de composants électroniques. Le câblage de la puce à la carte électronique est effectué par la technique de wire-bonding, c'est à-dire la réalisation d'un pont électrique par l'intermédiaire, par exemple, de fils en or de diamètre 20 micromètres positionnés entre la puce électronique et le support flexible représentant le circuit imprimé.

Ensuite on connecte les deux extrémités non revêtues de l'antenne primaire au circuit imprimé en utilisant une colle conductrice par exemple la H20E de la marque Tedella.

Enfin on recouvre la carte électronique et les terminaisons non revêtues de l'antenne primaire par un matériau rigide et isolant électriquement de type résine époxy haute température par la technique globtop bien connu des hommes du métier.

Dans une deuxième phase, correspondant au métier des télécommunications, on constitue l'antenne rayonnante qui assurera la transmission et la réception des ondes radioélectriques avec le lecteur à émission radio fréquence.

Selon un premier mode de réalisation spécifique, la réalisation de l'antenne rayonnante est couplée à l'assemblage de cette même antenne rayonnante avec la partie électronique réalisée lors de la première phase afin de faciliter l'insertion de cette partie électronique au sein de l'antenne rayonnante.

Ainsi, on réalise tout d'abord une première partie de l'antenne rayonnante à l'aide d'une machine à enrouler les ressort délivrant un fil d'acier de diamètre externe de 150 micromètres qui est déformée plastiquement par déplacement imposée. Bien entendu, la machine peut être automatisée afin d'adapter la déformation appliquée pour modifier le diamètre d'enroulement et le pas d'hélice à chaque boucle du ressort hélicoïdal en cours de fabrication. Cette première partie de l'antenne rayonnante comprend nécessairement la première sous zone de la première zone de l'antenne rayonnante et la quasi-totalité de la deuxième zone de l'antenne rayonnante qui présentera un diamètre d'enroulement plus élevé. Et éventuellement le pas d'hélice des boucles de cette deuxième zone est différent de celui des boucles de la première zone du ressort hélicoïdal.

Après cette première étape, la fabrication du ressort hélicoïdal est stoppée afin de mettre en place la partie électronique réalisée lors de la première phase à l'intérieur de la première partie de l'antenne rayonnante réalisée. L'opération est effectuée sur la machine à enrouler les ressorts elle-même.

Elle nécessite tout d'abord de relaxer les contraintes dans le ressort hélicoïdal formé en libérant l'une des extrémités du ressort hélicoïdal. Ceci a pour effet de diminuer les précontraintes dans le ressort hélicoïdal conduisant à augmenter le diamètre d'enroulement du ressort réalisé. Ensuite la mise en place de la partie électronique dans cette première partie du ressort hélicoïdal relaxé est effectuée à l'aide d'un pistolet qui est positionné en lieu et place du doigt déformant le fil acier. Le changement d'outil est fait à l'aide de la rotation d'une broche dont les extrémités angulaires sont d'une part le pistolet et d'autre part le doigt de déformation du fil d'acier.

Cette mise en place consiste, par exemple, à la mise en appui de l'une des extrémités axiales de la partie électronique contre une boucle de la première partie de l'antenne rayonnante tout en assurant un parallélisme voire une coaxialité entre l'axe de révolution de la première partie de l'antenne rayonnante de l'axe de révolution de la partie électronique. De plus, le positionnement axial de la partie électronique au sein de la première partie de l'antenne rayonnante doit permettre de sensiblement centrer le plan médian de l'antenne primaire de la partie électronique par rapport à l'antenne rayonnante finale.

Cette mise en place est effectuée à l'aide d'un pistolet à propulsion mécanique. Cependant tout autre type de propulsion : magnétique, pneumatique, hydraulique ou en combinaison est envisageable. Ensuite, le doigt de déformation est remis en position, la partie électronique étant maintenue en position à l'aide de la deuxième zone de l'antenne rayonnante déjà réalisée.

Enfin la troisième étape consiste à reprendre la constitution du ressort hélicoïdal où on l'avait stoppé à la fin de la première étape avec la présence de la partie électronique. Après avoir libéré la partie électronique de ses moyens de saisie et de positionnement et de les avoir évacué de la zone de réalisation du ressort hélicoïdal, on réalise la deuxième sous zone de la première partie de l'antenne rayonnante. Le fil d'acier est alors sectionné lorsque la longueur du ressort hélicoïdal a atteint la longueur L0 désirée

Selon un deuxième mode de réalisation du transpondeur radiofréquence non illustré à la figure 7, on réalise tout d'abord une antenne rayonnante sous la forme d'un ressort hélicoïdal monobrin comprenant une deuxième zone dans laquelle sera mise la partie électronique. Cette deuxième zone comprend un diamètre d'enroulement D2 et un pas d'hélice P2. Le ressort hélicoïdal comprend aussi deux segments d'une première zone de l'antenne rayonnante situés à chaque extrémité de la deuxième zone. Cette première zone est défini par des hélices ayant un diamètre d'enroulement D1 et un pas d'hélice PI. Ce type de ressort hélicoïdal peut classiquement est fabriqué sur une machine à enrouler standard ayant des cycles de fabrication optimisés en temps.

Ensuite, vient l'étape d'assemblage de la partie électronique réalisée lors de la première phase dans l'antenne rayonnante constituée à l'étape précédente.

Dans un premier temps, il convient de repérer sur le ressort hélicoïdal réalisé à l'étape précédente, une zone de transition qui comprend généralement une spire entre la deuxième zone et un segment de la première zone de l'antenne rayonnante.

Le passage de la première zone à la deuxième zone se traduit par une variation du diamètre d'enroulement du fil accompagnée éventuellement d'une variation du pas d'hélice. Pour repérer cette zone de transition, il convient d'employer par exemple une caméra se focalisant sur quelques spires du ressort hélicoïdal. Idéalement on présente une extrémité du ressort hélicoïdal et on déplace le ressort hélicoïdal suivant son axe de révolution U devant le champ de la caméra. Un logiciel de traitement d'images ou l'œil humain permet d'observer le diamètre d'enroulement du ressort comme étant le cylindre circonscrit au ressort hélicoïdal d'axe de révolution U. On repère ainsi la variation du diamètre du cylindre correspondant à la zone de transition entre deux zones où le diamètre d'enroulement est constant.

On repère ensuite la dernière spire de la zone de transition qui est en contact avec la deuxième zone du ressort hélicoïdal où le diamètre d'enroulement est D2. Pour cela on déplace de nouveau par des allers retours successives le ressort hélicoïdal le long de l'axe de révolution U devant le champ de la caméra.

Par rapport à une droite de pliage du ressort défini sur la machine sur laquelle est monté le ressort hélicoïdal, il convient de positionner une extrémité radialement extérieure de la dernière spire de la zone de transition sur la droite de pliage. Pour cela, il convient à la fois de mouvoir le ressort hélicoïdal selon une direction suivant l'axe de révolution U du ressort. Eventuellement il faut mouvoir transversalement le ressort afin que la zone de pliage tangente le cylindre circonscrit au ressort hélicoïdal au niveau de la zone de transition. Enfin, il faut faire pivoter le ressort autour de son axe de révolution U jusqu'à une position où une extrémité de la dernière spire se trouve sur la droite de pliage. La position du ressort hélicoïdal est alors bloquée en rotation et déplacement.

On lance le cycle de la machine qui provoque le pliage du segment de la première zone du ressort hélicoïdal par rapport au reste du ressort hélicoïdal autour de la droite de pliage qui est perpendiculaire à l'axe de révolution U. Ce pliage d'un angle, classiquement de 90° pour nos applications où le diamètre du cylindre circonscrit à la partie électronique est proche du diamètre intérieur de la deuxième zone de l'antenne rayonnante, permet de générer une ouverture au niveau de l'extrémité de la deuxième zone du ressort hélicoïdal. Le diamètre inscrit de cette ouverture est supérieur ou égal au diamètre du cylindre circonscrit à la partie électronique permettant l'insertion aisée de la partie électronique.

On introduit la partie électronique dans la deuxième zone de l'antenne rayonnante par l'intermédiaire de l'ouverture. L'extrémité axiale de la partie électronique selon l'axe principale du cylindre circonscrit à la partie électronique doit être située à une distance inférieure au pas d'hélice de la deuxième zone du ressort hélicoïdal au-dessus d'un plan particulier. Ce plan dont la normale est l'axe de révolution de la partie du ressort hélicoïdal bloquée dans la machine passe par le point de pliage; Ainsi, la partie électronique, une fois insérée dans la deuxième zone de l'antenne rayonnante ne gêne nullement de repliement du segment de la première zone de l'antenne rayonnante. Idéalement, la partie électronique est entièrement en dessous du plan orthogonal.

On plie de nouveau le ressort hélicoïdal au niveau du point de pliage d'un second angle opposé au premier angle autour de l'axe perpendiculaire à l'axe de révolution de la partie du ressort hélicoïdal bloquée dans la machine. L'amplitude de cet angle est ici d'environ 105 degrés pour un fil en acier doux de diamètre 0,225 mm. L'amplitude est au moins égale ou supérieure à l'amplitude du premier angle. Les axes de révolution de la partie bloquée du ressort hélicoïdal et de la partie libre du ressort hélicoïdal sont alors colinéaires. Dans ce cas, le premier pliage du segment de la première zone provoque une plastification localisée de l'acier au niveau du point de pliage. Pour assurer que le ressort final présente un axe de révolution de forme droite, il convient de plastifier la zone autour du point de pliage lors du second pliage ce qui entraine une augmentation du second angle de pliage.

L'antenne rayonnante ainsi constituée munie de sa partie électronique parfaitement positionnée à l'intérieur représente le transpondeur radiofréquence selon l'invention. Optionnellement, l'introduction de la partie électronique dans la deuxième zone du ressort hélicoïdal se fait par une mise en appui de la seconde extrémité axiale de la partie électronique sur une spire de la seconde zone de transition entre les première et deuxième zones du ressort hélicoïdal. Cette mise en appui assure à la fois le positionnement axiale de la partie électronique au sein du ressort hélicoïdal et une coaxialité de l'antenne primaire de la partie électronique avec le ressort hélicoïdal.

La dernière phase, une fois le transpondeur radiofréquence 1 réalisé, est l'obtention d'un patch d'identification 2 pour faciliter une mise en application du transpondeur radiofréquence 1 dans des objets à identifier en partie constitués par des mélanges élastomères. On procède de la façon suivante pour cette phase.

On place le transpondeur radiofréquence 1 constitué à la phase précédente au centre d'une masse souple 3. Comme par exemple illustré dans la figure 5, le transpondeur radiofréquence 1 est pris en sandwich entre deux plaques 3a et 3b en matériau élastomère cru de dimensions fonction de celle du transpondeur radiofréquence 1 et une épaisseur comprise par exemple entre 2 et 5 millimètres. La direction longitudinale des plaques correspond à l'axe de l'antenne rayonnante 10. L'ensemble se situe au préalable sur la face interne d'une matrice métallique d'un outil de presse de dimension adaptée au volume de masse élastomère.

On applique à l'aide d'un poinçon métallique complémentaire de la matrice, un effort de compression au moyen d'un outil de presse, par exemple une presse uni axiale pneumatique, à l'ensemble afin de former une géométrie compacte présentant un axe de symétrie, de longueur par exemple de 60 millimètres, inscrit dans un cylindre de diamètre d'environ 20 millimètres correspondant à un patch d'identification 2 du transpondeur radiofréquence 1 selon l'invention.

D'autres procédés peuvent être employés pour incorporer le transpondeur radiofréquence 1, au sein d'une masse d'un ou plusieurs mélanges élastomères comme par exemple le procédé d'extrusion ou d'injection.

Dans un mode de réalisation particulier, on emploie des promoteurs d'adhésion bien connus de l'homme du métier entre la masse rigide 30 en résine époxy haute température encapsulant la partie électronique 20 du transpondeur radio fréquence 1 et le mélange élastomère du patch d'identification 2. Cela peut améliorer l'endurance du transpondeur radiofréquence en service.

Finalement, la mise en œuvre industrielle d'un transpondeur radiofréquence 1 selon l'invention pour un objet à identifier tel un bandage pneumatique peut être effectuée selon au moins deux modes de réalisation. Dans un premier mode de réalisation préférentielle, il suffit d'incorporer le transpondeur radiofréquence 1 ou le patch d'identification 2 en mélange élastomère cru dans l'ébauche du pneumatique lors de la confection du bandage pneumatique. On place géométriquement le transpondeur ou le patch d'identification 2 entre les divers composants élastomères de l'ébauche crue du bandage pneumatique. Idéalement, il est placé dans une zone géographique subissant des niveaux de déformations acceptables pour que l'antenne rayonnante 10 ne soit pas déformée plastiquement. L'ébauche subit les diverses phases de fabrication du pneumatique dont la cuisson en autoclave vulcanisant les différents mélanges élastomères et rendant solidaire le transpondeur ou le patch d'identification du bandage pneumatique ainsi réalisé. Le transpondeur radiofréquence 1 est alors prêt à l'emploi.

Un autre mode de réalisation préférentielle consiste à figer la structure élastomère du patch d'identification 2 par réticulation ou vulcanisation au cours d'une étape postérieure à la fabrication du patch d'identification 2. Le dispositif obtenu à la suite de cette opération est fixé sur une zone d'accueil du bandage pneumatique par une technique classique de fixation élastomère/élastomère connue de l'homme du métier comme par exemple l'adhésion par réticulation à froid d'une couche de gomme de liaison sur.la gomme intérieure du bandage pneumatique Le transpondeur radiofréquence 1 du pneumatique est alors prêt à l'emploi.

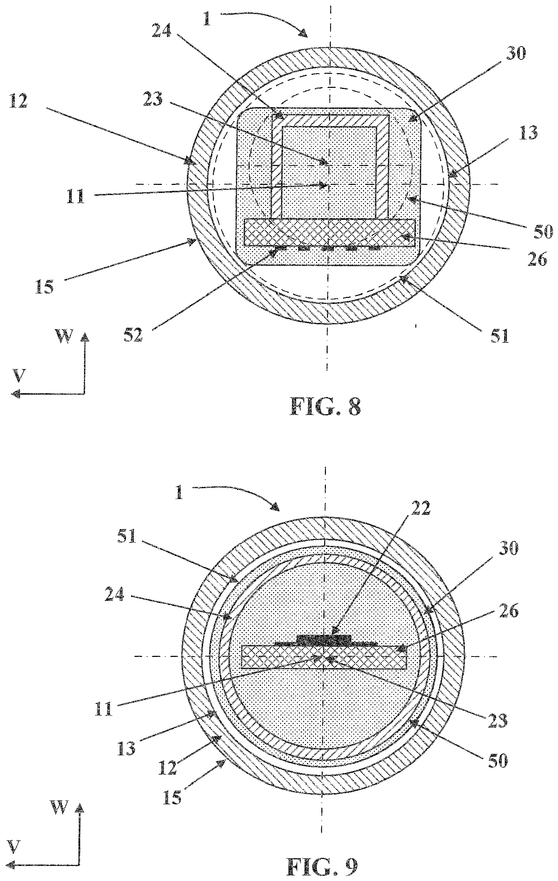

La figure 8 est une vue en coupe transversale de la deuxième zone de l'antenne rayonnante lorsque la partie électronique, enrobée dans une masse rigide 30 circonscrite dans un cylindre 51, est placée à l'intérieur de l'antenne rayonnante pour former un transpondeur radiofréquence 1 passif selon l'invention. L'antenne rayonnante est constituée par un ressort hélicoïdal à l'aide d'un fil d'acier 12 de diamètre 0,20 millimètres sur un diamètre d'enroulement variable définissant un diamètre intérieur 13 et un diamètre extérieur 15 de l'antenne rayonnante.

La partie électronique comprend dans cette première conception un circuit imprimé 26 sur lequel est connecté électriquement et mécaniquement une puce électronique. Sur la face supérieur du circuit imprimé 26 selon la direction W du transpondeur radiofréquence 1 est positionnée une antenne primaire 24. Cette antenne primaire 24 prend ici la forme d'une bobine constituée par 16 spires rectangulaires dont l'un des côtés est constituée par une piste galvanique réalisée sur la face supérieur du circuit imprimé 26. Ces spires sont entières et les extrémités libres de l'antenne primaire 24 sont reliées galvaniquement à la puce électronique de la carte électronique. L'antenne primaire 24 est inscrite dans un cylindre 50 dont l'axe de révolution 23 est parallèle à l'axe de révolution 11 de l'antenne rayonnante. Le diamètre de ce cylindre 50 est supérieur au tiers du diamètre intérieur 13 de l'antenne rayonnante assurant un couplage électromagnétique entre les deux antennes.

La face inférieure du circuit imprimé 26 selon la direction W du transpondeur radiofréquence 1 comprend un circuit électronique additionnel 52 sous la forme d'une piste galvanique en forme de méandre dont les extrémités sont connectés à la carte électronique à l'aide de ponts non représentés assurant la connexion électrique entre les faces inférieur et supérieur du circuit imprimé 26. Ce circuit galvanique en cuivre d'une longueur de 10 millimètres et une largeur de 1 millimètre permet d'adapter l'impédance électrique de la carte électronique à celle de l'antenne primaire 24 afin d'optimiser l'échange énergétique au sein de la partie électronique.

Enfin la partie électronique est englobé dans une masse 30 rigide et isolante électriquement de type résine époxy haute température qui protège les composants et les connexions mécaniques et électriques de la carte électronique ainsi que l'antenne primaire 24. Cette masse 30 prend la forme d'un parallélépipède, ici un rectangle, afin de réduire la quantité de matière utilisé dans le but d'optimiser le rapport technico économique de la partie électronique. Cette masse 30 est inscrite dans un cylindre 51 dont l'axe de révolution est ici coaxial à l'axe de révolution 11 de l'antenne rayonnante. Afin de minimiser le diamètre de ce cylindre et faciliter l'insertion de la masse 30 incluant la partie électronique au sein de l'antenne rayonnante, les bords du parallélépipède sont émoussés. Cela permet aussi d'assurer l'intégrité de la masse 30, donc de la partie électronique, et de l'antenne rayonnante en augmentant la surface potentiellement en contact entre les deux structures.

L'émoussement de la masse d'enrobage 30 peut être simplement effectué par un procédé de tribofinition. Suite au procédé de fabrication de la partie électronique, l'isolation électronique de la partie électronique par de la résine époxy peut employer des procédés, comme le moulage. Ces procédés génèrent un contour parallélépipédique de la masse d'enrobage 30 avec des arêtes vives. Bien entendu, la masse d'enrobage 30 peut contenir à sa surface externe que le matériaux d'isolation électrique comme la résine époxy mais aussi le matériau de la carte électronique qui est par nature un isolant électrique Le procédé de tribofinition consiste alors à mélanger ces objets parallélépipédiques potentiellement bi matériaux avec des objets de type rigide, c'est à-dire non déformable par rapport à la masse d'enrobage 30, de forme arrondie comme des billes, des cylindres afin d'émousser les arêtes du parallélépipède que l'on nommera émousseur. Cela est obtenu avec des émousseurs extrêmement résistants mécaniquement, généralement en céramique. Le procédé consiste à mélanger les masses d'enrobage parallélépipédiques 30 contenant la partie électroniques avec des émousseurs plus rigides en présence d'un liquide lubrifiant comme par exemple de l'eau savonneuse. Le liquide lubrifiant limite ainsi le choix entre les divers objets pouvant générer l'initiation et la propagation de fissures au niveau des masses d'enrobage que l'on tient à émousser. Le procédé de tribofinition consiste à mélanger la composition de liquide lubrifiant, de masse d'enrobage 30 de forme parallélépipédique à arêtes vives comprenant de la résine époxy ou du circuit imprimé et des émousseurs résistants, de forme arrondies et plus rigides que les masses d'enrobage de sorte à faciliter le frottement des émousseurs sur les masses d'enrobage. Le frottement n'a aucun effet néfaste sur les zones planes et continues de la masse d'enrobage. Au contraire, elle érodera progressivement les zones discontinues de la masse d'enrobage que représentes les arêtes du parallélépipède. Le mélangeage s'effectue par exemple par centrifugation de la composition dans un tambour étanche pendant une durée suffisante pour générer des rayons de courbure au niveau des arêtes de la masse d'enrobage 30 de l'ordre de 0,2 à 0,5 millimètres. Le rayon de courbure obtenu est nécessairement fonction du matériau à émousser, il peut être différent sur une masse d'enrobage dont le surface externe est constituée de matériaux de rigidité différentes Par exemple, une centrifugation d'une heure à deux heures à une vitesse de rotation de l'ordre de 1 à 5 tour par seconde permet d'obtenir les parallélépipèdes émoussés désirées.

Afin de faciliter le tri des divers composants de la composition, il est préférable aussi que la taille des divers composants soit différente. Par exemple, il est souhaitable que la dimension caractéristique des émousseurs soit supérieure à celles des masses d'enrobage 30. Ainsi l'utilisation d'un tamis dont la dimension des perforations est adaptée pour d'une part laisser passer une catégorie de composants comme les passe d'enrobage 30 et le liquide lubrifiant et d'autre part retenir la seconde catégorie de composants comme les émousseurs permet de trier rapidement les divers composants de la composition.

Enfin la distance entre l'antenne primaire 24 et le diamètre intérieur 13 de l'antenne rayonnante est ici inférieur à 15 pourcents du diamètre intérieur 13 de l'antenne rayonnante. Cette distance minimale est au moins obtenue en un point géométrique voire deux en cas de parallélisme des axes des antennes. Cette proximité optimise l'efficacité du transfert énergétique entre les antennes primaire 24 et rayonnante.

La figure 9 est une vue en coupe transversale de la deuxième zone de l'antenne rayonnante lorsque la partie électronique, enrobée dans une masse rigide 30 circonscrite dans un cylindre 51, est placée à l'intérieur de l'antenne rayonnante pour former un transpondeur radiofréquence 1 passif selon l'invention. Cependant la partie électronique est ici d'une autre conception. L'antenne rayonnante est constituée par un ressort hélicoïdal à l'aide d'un fil d'acier 12 de diamètre 0,18 millimètres sur un diamètre d'enroulement variable définissant un diamètre intérieur 13 et un diamètre extérieur 15 de l'antenne rayonnante.

La partie électronique comprend dans cette deuxième conception un circuit imprimé 26 sur lequel est connecté électriquement et mécaniquement une puce électronique 22 sur la face supérieur du circuit imprimé 26 selon la direction W du transpondeur radiofréquence 1 .Ce circuit imprimé 26 est connecté électriquement aux extrémités libres d'une antenne primaire 24. Cette antenne primaire 24 prend ici la forme d'une bobine constituée de spires de forme circulaire. L'antenne primaire 24 est inscrite dans un cylindre 50 dont l'axe de révolution 23 est parallèle, ici même coaxial, à l'axe de révolution 11 de l'antenne rayonnante. Le diamètre de ce cylindre 50 est supérieur au tiers du diamètre intérieur 13 de l'antenne rayonnante assurant un couplage électromagnétique entre les deux antennes. En fait, le diamètre de ce cylindre 50 correspond dans ce cas à 90 pourcents du diamètre intérieur 13 de l'antenne rayonnante. La proximité des deux antennes assure un excellent couplage électromagnétique en optimisant la surface garantissant le transfert d'énergie entre les deux antennes. Ce couplage serait optimum en cas de coaxialité entre l'axe du cylindre 50 et l'axe de révolution 11 de l'antenne rayonnante.

Le circuit imprimé 26 est situé à l'intérieur de l'antenne primaire 24 afin de limiter la longueur totale de la partie électronique. Le nombre de spires est ici un nombre non entier afin que la spire non complètement réalisée serve de circuit électronique additionnel afin d'adapter l'impédance électrique de l'antenne primaire 24 à celle de la carte électronique.

Dans notre exemple, la partie électronique est englobé dans une masse 30 rigide et isolante électriquement de type résine époxy haute température sous la forme d'un cylindre 51 dont le diamètre est légèrement supérieur au diamètre du cercle circonscrit 50 de la partie électronique. Cette masse 30 rigide et isolante électriquement protège les composants électroniques et les connexions électriques entre les composants. La forme cylindrique de cette masse 30 de protection assure une intégrité mécanique à la partie électronique ainsi qu'à l'antenne rayonnante en évitant les contacts ponctuels entre les deux structures qui sont sources de concentrations de contraintes thermomécaniques. La proximité des deux structures est ici propice à des contacts.

## Revendications

1. Transpondeur radiofréquence (1) de type passif destiné à être intégré à une masse en mélange élastomère comprenant :
- Une antenne rayonnante (10) dipôle constituée d'un ressort hélicoïdal mono brin présentant un axe de révolution (11), un plan médian (19), un diamètre d'enroulement (D1,D2), un pas d'hélice (P1,P2), un diamètre de fil définissant les diamètres intérieur (13) et extérieur (15) de l'antenne rayonnante (10), dont la longueur (L0) est adaptée pour communiquer sur une bande de fréquence avec un lecteur à émission radiofréquence,
- Une partie électronique (20) située à l'intérieur de l'antenne rayonnante (10) comprenant ;
i. Une puce électronique (22) ,
ii. Une antenne primaire (24) connectée électriquement à la puce électronique (22) et couplée électro magnétiquement à l'antenne rayonnante (10),
iii. ladite antenne primaire (24), présentant un axe (23) sensiblement parallèle à l'axe de révolution (11) de l'antenne rayonnante (10),
iv. la dite antenne primaire (24) présentant un plan médian (21) qui est sensiblement superposé avec le plan médian (19) de l'antenne rayonnante (10),
v. Ladite antenne primaire (24) étant circonscrite dans un cylindre (50) dont l'axe de révolution est parallèle à l'axe (11) de l'antenne rayonnante et dont le diamètre est supérieur ou égal au tiers du diamètre intérieur de l'antenne rayonnante (10) située au droit de l'antenne primaire (24),
**caractérisée en ce que,** pour une première zone (101, 101a, 101b) de l'antenne rayonnante (10) où l'antenne rayonnante (10) n'est pas située au droit de la partie électronique (20), un premier pas (P1) de l'antenne rayonnante (10) correspondant au pas d'hélice de l'antenne rayonnante (10) dans cette première zone (101,101a, 101b) est supérieur au deuxième pas (P2) de l'antenne rayonnante (10) correspondant au pas d'hélice de l'antenne rayonnante (10) dans une zone où l'antenne rayonnante (10) est située au droit de la partie électronique (20).

2. Transpondeur radiofréquence (1) selon la revendication 1 dans lequel le deuxième pas (P2) d'hélice de l'antenne rayonnante (10) est constant.

3. Transpondeur radiofréquence (1) selon l'une des revendications précédentes dans lequel la distance minimale entre le cylindre (50) circonscrit à l'antenne primaire et l'antenne rayonnante (10) est inférieure à 15% de la moitié du diamètre intérieur de l'antenne rayonnante (10).

4. Transpondeur radiofréquence (1) selon l'une des revendications précédentes dans lequel l'axe du cylindre circonscrit (50) à l'antenne primaire (24) est parallèle à l'axe de révolution (11) de l'antenne rayonnante (10).

5. Transpondeur radiofréquence (1) selon la revendication précédente dans lequel le diamètre du cylindre (50) circonscrit à l'antenne primaire (24) est supérieur à 75% du diamètre intérieur de l'antenne rayonnante (10).

6. Transpondeur radiofréquence (1) selon l'une des revendications précédentes dans lequel l'antenne primaire (24) étant connectée aux bornes d'une carte électronique comprenant la puce électronique (22), l'impédance électrique de l'antenne primaire (24) est adaptée à l'impédance électrique de la carte électronique.

7. Transpondeur radiofréquence (1) selon la revendication précédente dans lequel, l'antenne primaire (24) étant une bobine constituée de spires, le nombre de spires est un nombre réel compris 5 et 30.

8. Transpondeur radiofréquence (1) selon la revendication précédente dans lequel l'adaptation d'impédance de l'antenne primaire (24) est réalisée par au moins un circuit électronique additionnel positionné sur la carte électronique.

9. Transpondeur radiofréquence (1) selon la revendication précédente dans lequel le circuit électronique additionnel est un circuit galvanique (52) en forme de méandre.

10. Transpondeur radiofréquence (1) selon l'une des revendications précédentes dans lequel le rapport entre le pas d'hélice (P1) et le diamètre d'enroulement (D1) pour au moins une boucle de l'antenne rayonnante (10) située dans la première zone (101, 101a, 101b) de l'antenne rayonnante (10) est supérieur à 0,8.

11. Transpondeur radiofréquence (1) selon l'une des revendications précédentes dans lequel, pour une deuxième zone (102) de l'antenne rayonnante (10) où l'antenne rayonnante (10) est située au droit de la partie électronique (20), le rapport entre le pas d'hélice (P2) et le diamètre d'enroulement (D2) pour chaque boucle de l'antenne rayonnante (10) est inférieur ou égal à 0,8.

12. Transpondeur radiofréquence (1) selon l'une des revendication précédentes, dans lequel un premier diamètre intérieur de l'antenne rayonnante (10) correspondant au diamètre intérieur de l'antenne rayonnante (10) dans la première zone (101, 101a, 101b) est inférieur à un deuxième diamètre intérieur de l'antenne rayonnante (10) correspondant au diamètre intérieur de l'antenne rayonnante (10) dans une deuxième zone (102) différente de la paremière zone (101,101a, 101b) et la partie électronique (20) est circonscrite dans un cylindre (51) dont l'axe de révolution est parallèle à l'axe de révolution (11) de l'antenne rayonnante (10) et dont le diamètre est supérieur ou égal au premier diamètre intérieur de l'antenne rayonnante (10).

13. Transpondeur radiofréquence (1) selon l'une des revendications précédentes dans lequel la communication avec le lecteur à émission radiofréquence s'effectue dans la bande des UHF

14. Transpondeur radiofréquence (1) selon l'une des revendications précédentes dans lequel le diamètre d'enroulement (D2) de l'antenne rayonnante (10) dans la deuxième zone (102) est compris entre 1,4 et 2,0 millimètres.

15. Patch d'identification (2) comportant un transpondeur radiofréquence (1) selon l'une quelconque des revendications précédentes, dans lequel le transpondeur radiofréquence (1) est noyé dans au moins un mélange élastomère (3) souple et isolant électriquement.

## Patentansprüche

1. Passiver Radiofrequenz-Transponder (1), der dazu bestimmt ist, in eine Masse aus Elastomermischung eingebaut zu werden, der enthält:
- eine strahlende Dipolantenne (10) bestehend aus einer Eindraht-Schraubenfeder mit einer Drehachse (11), einer Mittelebene (19), einem Wicklungsdurchmesser (D1, D2), einer Gewindesteigung (P1, P2), einem Drahtdurchmesser, der die Innen- (13) und Außendurchmesser (15) der strahlenden Antenne (10) definiert, deren Länge (L0) geeignet ist, mit einem Lesegerät mit Radiofrequenz-Abstrahlung in einem Frequenzband zu kommunizieren,
- einen innerhalb der strahlenden Antenne (10) befindlichen elektronischen Teil (20), der enthält:
i. einen Chip (22),
ii. eine Primärantenne (24), die elektrisch mit dem Chip (22) verbunden und elektromagnetisch mit der strahlenden Antenne (10) gekoppelt ist,
iii. wobei die Primärantenne (24) eine Achse (23) im Wesentlichen parallel zur Drehachse (11) der strahlenden Antenne (10) aufweist,
iv. wobei die Primärantenne (24) eine Mittelebene (21) aufweist, die im Wesentlichen mit der Mittelebene (19) der strahlenden Antenne (10) überlappt,
v. wobei die Primärantenne (24) von einem Zylinder (50) umgrenzt wird, dessen Drehachse parallel zur Achse (11) der strahlenden Antenne ist und dessen Durchmesser größer als ein oder gleich einem Drittel des Innendurchmessers der strahlenden Antenne (10) ist, die sich gegenüber der Primärantenne (24) befindet,
**dadurch gekennzeichnet, dass** für eine erste Zone (101, 101a, 101b) der strahlenden Antenne (10), in der die strahlende Antenne (10) sich nicht gegenüber dem elektronischen Teil (20) befindet, eine erste Steigung (P1) der strahlenden Antenne (10), die der Gewindesteigung der strahlenden Antenne (10) in dieser ersten Zone (101, 101a, 101b) entspricht, größer ist als die zweite Steigung (P2) der strahlenden Antenne (10), die der Gewindesteigung der strahlenden Antenne (10) in einer Zone entspricht, in der die strahlende Antenne (10) sich gegenüber dem elektronischen Teil (20) befindet.

2. Radiofrequenz-Transponder (1) nach Anspruch 1, wobei die zweite Gewindesteigung (P2) der strahlenden Antenne (10) konstant ist.

3. Radiofrequenz-Transponder (1) nach einem der vorhergehenden Ansprüche, wobei der minimale Abstand zwischen dem auf die Primärantenne beschränkten Zylinder und der strahlenden Antenne (10) geringer als 15% der Hälfte des Innendurchmessers der strahlenden Antenne (10) ist.

4. Radiofrequenz-Transponder (1) nach einem der vorhergehenden Ansprüche, wobei die Achse des auf die Primärantenne (24) beschränkten Zylinders (50) parallel zur Drehachse (11) der strahlenden Antenne (10) ist.

5. Radiofrequenz-Transponder (1) nach dem vorhergehenden Anspruch, wobei der Durchmesser des auf die Primärantenne (24) beschränkten Zylinders (50) größer als 75% des Innendurchmessers der strahlenden Antenne (10) ist.

6. Radiofrequenz-Transponder (1) nach einem der vorhergehenden Ansprüche, wobei, da die Primärantenne (24) mit den Anschlüssen einer den Chip (22) enthaltenden Elektronikkarte verbunden ist, die elektrische Impedanz der Primärantenne (24) an die elektrische Impedanz der Elektronikkarte angepasst ist.

7. Radiofrequenz-Transponder (1) nach dem vorhergehenden Anspruch, wobei, da die Primärantenne (24) eine aus Windungen bestehende Spule ist, die Anzahl von Windungen eine reale Zahl zwischen 5 und 30 ist.

8. Radiofrequenz-Transponder (1) nach dem vorhergehenden Anspruch, wobei die Impedanzanpassung der Primärantenne (24) durch mindestens eine zusätzliche elektronische Schaltung durchgeführt wird, die auf der Elektronikkarte positioniert ist.

9. Radiofrequenz-Transponder (1) nach dem vorhergehenden Anspruch, wobei die zusätzliche elektronische Schaltung eine mäanderförmige galvanische Schaltung (52) ist.

10. Radiofrequenz-Transponder (1) nach einem der vorhergehenden Ansprüche, wobei das Verhältnis zwischen der Gewindesteigung (P1) und dem Wicklungsdurchmesser (D1) für mindestens eine Schlaufe der strahlenden Antenne (10), die sich in der ersten Zone (101, 101a, 101b) der strahlenden Antenne (10) befindet, größer als 0,8 ist.

11. Radiofrequenz-Transponder (1) nach einem der vorhergehenden Ansprüche, wobei, für eine zweite Zone (102) der strahlenden Antenne (10), in der die strahlende Antenne (10) sich gegenüber dem elektronischen Teil (20) befindet, das Verhältnis zwischen der Gewindesteigung (P2) und dem Wicklungsdurchmesser (D2) für jede Schlaufe der strahlenden Antenne (10) kleiner als oder gleich 0,8 ist.

12. Radiofrequenz-Transponder (1) nach einem der vorhergehenden Ansprüche, wobei ein erster Innendurchmesser der strahlenden Antenne (10) entsprechend dem Innendurchmesser der strahlenden Antenne (10) in der ersten Zone (101, 101a, 101b) kleiner als ein zweiter Innendurchmesser der strahlenden Antenne (10) entsprechend dem Innendurchmesser der strahlenden Antenne (10) in einer zweiten Zone (102) anders als die erste Zone (101, 101a, 101b) ist, und der elektronische Teil (20) von einem Zylinder (51) umgrenzt wird, dessen Drehachse parallel zur Drehachse (11) der strahlenden Antenne (10) und dessen Durchmesser größer als der oder gleich dem ersten Innendurchmesser der strahlenden Antenne (10) ist.

13. Radiofrequenz-Transponder (1) nach einem der vorhergehenden Ansprüche, wobei die Kommunikation mit dem Lesegerät mit Radiofrequenz-Abstrahlung im UHF-Band erfolgt.

14. Radiofrequenz-Transponder (1) nach einem der vorhergehenden Ansprüche, wobei der Wicklungsdurchmesser (D2) der strahlenden Antenne (10) in der zweiten Zone (102) zwischen 1,4 und 2,0 Millimeter liegt. 5

15. Identifikations-Patch (2), das einen Radiofrequenz-Transponder (1) nach einem der vorhergehenden Ansprüche aufweist, wobei der Radiofrequenz-Transponder (1) in mindestens eine weiche und elektrisch isolierende Elastomermischung (3) eingebettet ist.

## Claims

1. Passive radiofrequency transponder (1) intended to be integrated into a mass made of elastomer blend, comprising:
- a radiating dipole antenna (10) consisting of a single-strand helical spring having an axis of revolution (11), a median plane (19), a winding diameter (D1, D2), a helix pitch (PI, P2) and a wire diameter defining the inside diameter (13) and outside diameter (15) of the radiating antenna (10), the length (L0) of which is suitable for communication in a frequency band with a radiofrequency-transmitting reader,
- an electronic portion (20) located inside the radiating antenna (10), comprising:
i. an electronic chip (22),
ii. a primary antenna (24) electrically connected to the electronic chip (22) and electromagnetically coupled to the radiating antenna (10),
iii. said primary antenna (24) having an axis (23) substantially parallel to the axis of revolution (11) of the radiating antenna (10),
iv. said primary antenna (24) having a median plane (21) which is substantially superposed with the median plane (19) of the radiating antenna (10),
v. said primary antenna (24) being circumscribed by a cylinder (50) the axis of revolution of which is parallel to the axis (11) of the radiating antenna and the diameter of which is larger than or equal to one third of the inside diameter of the radiating antenna (10), located plumb with the primary antenna (24),
**characterized in that,** in a first region (101, 101a, 101b) of the radiating antenna (10), in which the radiating antenna (10) is not located plumb with the electronic portion (20), a first pitch (P1) of the radiating antenna (10) corresponding to the helix pitch of the radiating antenna (10) in this first region (101, 101a, 101b) is larger than the second pitch (P2) of the radiating antenna (10) corresponding to the helix pitch of the radiating antenna (10) in a region in which the radiating antenna (10) is located plumb with the electronic portion (20).

2. Radiofrequency transponder (1) according to Claim 1, wherein the second helix pitch (P2) of the radiating antenna (10) is constant.

3. Radiofrequency transponder (1) according to one of the preceding claims, wherein the minimum distance between the cylinder (50) circumscribed about the primary antenna and the radiating antenna (10) is smaller than 15% of half the inside diameter of the radiating antenna (10).

4. Radiofrequency transponder (1) according to one of the preceding claims, wherein the axis of the cylinder (50) circumscribed about the primary antenna (24) is parallel to the axis of revolution (11) of the radiating antenna (10).

5. Radiofrequency transponder (1) according to the preceding claim, wherein the diameter of the cylinder (50) circumscribed about the primary antenna (24) is larger than 75% of the inside diameter of the radiating antenna (10).

6. Radiofrequency transponder (1) according to one of the preceding claims, wherein the primary antenna (24) being connected to the terminals of a circuit board comprising the electronic chip (22), the electrical impedance of the primary antenna (24) is matched to the electrical impedance of the circuit board.

7. Radiofrequency transponder (1) according to the preceding claim, wherein the primary antenna (24) being a coil consisting of turns, the number of turns is a real number comprised between 5 and 30.

8. Radiofrequency transponder (1) according to the preceding claim, wherein the impedance of the primary antenna (24) is matched using at least one additional electronic circuit positioned on the circuit board.

9. Radiofrequency transponder (1) according to the preceding claim, wherein the additional electronic circuit is a galvanic circuit (52) of meander shape.

10. Radiofrequency transponder (1) according to one of the preceding claims, wherein the ratio between the helix pitch (P1) and the winding diameter (D1) for at least one loop of the radiating antenna (10) located in the first region (101, 101a, 101b) of the radiating antenna (10) is higher than 0.8.

11. Radiofrequency transponder (1) according to one of the preceding claims, wherein, in a second region (102) of the radiating antenna (10) in which the radiating antenna (10) is located plumb with the electronic portion (20), the ratio between the helix pitch (P2) and the winding diameter (D2) for each loop of the radiating antenna (10) is lower than or equal to 0.8.

12. Radiofrequency transponder (1) according to one of the preceding claims, wherein a first inside diameter of the radiating antenna (10) corresponding to the inside diameter of the radiating antenna (10) in the first region (101, 101a, 101b) is smaller than a second inside diameter of the radiating antenna (10) corresponding to the inside diameter of the radiating antenna (10) in a second region (102) different from the first region (101, 101a, 101b) and the electronic portion (20) is circumscribed by a cylinder (51) the axis of revolution of which is parallel to the axis of revolution (11) of the radiating antenna (10) and the diameter of which is larger than or equal to the first inside diameter of the radiating antenna (10).

13. Radiofrequency transponder (1) according to one of the preceding claims, wherein the communication with the radiofrequency-transmitting reader occurs in the UHF band.

14. Radiofrequency transponder (1) according to one of the preceding claims, wherein the winding diameter (D2) of the radiating antenna (10) in the second region (102) is comprised between 1.4 and 2.0 millimetres.

15. Identification tag (2) comprising a radiofrequency transponder (1) according to any one of the preceding claims, wherein the radiofrequency transponder (1) is embedded in at least one supple and electrically insulating elastomer blend (3).
